# EUROPÄISCHE PATENTSCHRIFT

(11) **EP 3 933 109 B1**
(45) Veröffentlichungstag und Bekanntmachung des Hinweises auf die Patenterteilung: **07.12.2022**
(21) Anmeldenummer: 21181280.5
(22) Anmeldetag: 23.06.2021
(51) Int. Cl.: E01C 23/088

(54) **BODENBEARBEITUNGSMASCHINE MIT LÄNGENVERÄNDERLICHER STEIGEINRICHTUNG MIT MEHREREN UNTERSCHIEDLICHEN STEIGBEREITEN BETRIEBSSTELLUNGEN**
SOIL WORKING MACHINE WITH VARIABLE LENGTH RAISING DEVICE WITH SEVERAL DIFFERENT OPERATING POSITIONS
MACHINE DE TRAITEMENT DU SOL POURVUE DE DISPOSITIF D'ÉCHELLE MODIFIABLE EN LONGUEUR À PLUSIEURS RÉGLAGES DE FONCTIONNEMENT DE DIFFÉRENTES LARGEURS D'ÉCHELLE

(30) Priorität: 30.06.2020 DE 102020117251
(43) Veröffentlichungstag der Anmeldung: 05.01.2022
(73) Patentinhaber: Wirtgen GmbH, 53578 Windhagen (DE)
(72) Erfinder: Stinner, Tobias, 57645 Nister (DE); Berning, Christian, 53909 Zülpich (DE); Prassel, Philipp, 53577 Neustadt/Wied (DE)
(74) Vertreter: Ruttensperger Lachnit Trossin Gomoll

(56) Entgegenhaltungen:
- DE-A1-102018 128 296
- JP-A- H10 273 956
- US-A- 2 485 413
- US-A- 3 061 042

## Beschreibung

Die vorliegende Erfindung betrifft eine selbstfahrende Bodenbearbeitungsmaschine mit
- einem Maschinenrahmen,
- einem den Maschinenrahmen tragenden Fahrwerk, wobei das Fahrwerk wenigstens zwei auf einem Aufstandsuntergrund der Bodenbearbeitungsmaschine abrollbare Laufwerke umfasst,
- eine Arbeitsvorrichtung, welche zur Bearbeitung eines Bodens ausgebildet ist,
- eine Antriebskraftmaschine zur Bereitstellung von Antriebskraft für die Bodenbearbeitungsmaschine,
- einen auf einem Höhenniveau mit Abstand über dem Aufstandsuntergrund an dem Maschinenrahmen angeordneten Bedienstand zur Bedienung der Bodenbearbeitungsmaschine, und
- eine zwischen dem Aufstandsuntergrund und dem Bedienstand angeordnete Steigeinrichtung, welche eine Mehrzahl von Trittstufen aufweist, die längs einer zwischen Aufstandsuntergrund und dem Höhenniveau des Bedienstands verlaufenden und mit dem Aufstandsuntergrund einen Winkel einschließenden virtuellen Steigachse aufeinander folgend angeordnet sind,
wobei die Steigeinrichtung längs der Steigachse längenveränderlich ist und hierzu wenigstens eine der Trittstufen relativ zu wenigstens einer anderen der Trittstufen mittels eines Verstellaktuators verstellbar ist.

Eine derartige Bodenbearbeitungsmaschine in Gestalt einer Straßenkalt-Kleinfräse oder Straßenkleinfräse mit im Heckbereich angeordneter Fräswalze als der Arbeitsvorrichtung ist aus der DE 10 2014 010 488 A1 bekannt. Diese Druckschrift offenbart eine Kleinfräse, deren Steigeinrichtung zwischen einer sogenannten "Aufstiegposition", in welcher ein Maschinenführer über die Steigeinrichtung vom Aufstandsuntergrund zum Bedienstand und zurück gelangen kann, und einer von der Aufstiegposition verschiedenen sogenannten "Stauposition" verstellbar ist. In der Stauposition soll wenigstens im unteren Heckbereich der Kleinfräse die Steigeinrichtung entfernt sein, um die Längenabmessung der Kleinfräse in ihrem unteren, unmittelbar auf den Aufstandsuntergrund anschließenden Bereich zu verkürzen und so die Transportkapazität eines die Kleinfräse transportierenden Tiefladers effektiver nutzen zu können. So soll der Tieflader aufgrund des durch Verstellung der Steigeinrichtung in die Stauposition freigewordenen Raums nicht nur die Kleinfräse, sondern zusätzlich einen Personenkraftwagen transportieren können. Die Front des Personenkraftwagens soll dabei in dem Transportraum unter der Steigeinrichtung aufgenommen werden können, welcher durch das Verbringen der Steigeinrichtung in die Stauposition freigeworden ist.

Eine weitere Steigeinrichtung einer Kleinfräse ist aus der DE 10 2018 128 296 A1 bekannt. Diese Steigeinrichtung mit insgesamt drei Trittstufen weist eine maschinenrahmenfeste oberste Trittstufe und eine Trittstufenbaugruppe, umfassend die mittlere und die unterste Trittstufe, auf, wobei die Trittstufenbaugruppe gegen die Vorspannkraft einer Federanordnung von der obersten Trittstufe weg zum Aufstandsuntergrund hin verstellt und in der verstellten Stellung arretiert werden kann. Die Verstellung gegen die Vorspannkraft der Federanordnung erfolgt durch die Gewichtskraft des Maschinenführers, wenn dieser eine Trittstufe der Trittstufenbaugruppe belastet.

Bei beiden bekannten Steigeinrichtungen ist die unterste Trittstufe über Wangen aus Elastomermaterial mit den darüber angeordneten Trittstufen verbunden, damit die unterste Trittstufe während einer Bodenbearbeitung im Falle von Kollisionen mit Bodenmaterial passiv ausweichen kann.

Nachteilig an beiden bekannten Lösungen ist, dass diese Lösungen jeweils nur genau eine für eine Steigbewegung des Maschinenführers zwischen Bedienstand und Aufstandsuntergrund - egal in welche Richtung - steigbereite Betriebsstellung aufweisen.

Diese steigbereite Betriebsstellung kann im Einzelfall unergonomisch sein, etwa dann, wenn der Maschinenführer eine ungewöhnliche, von der Durchschnittsgröße eines Erwachsenen abweichende Körpergröße aufweist oder/und wenn der Bedienstand, wie bei den Kleinfräsen des oben genannten Standes der Technik, höhenveränderlich ist, also relativ zum Aufstandsuntergrund angehoben und abgesenkt werden kann, und sich in einer für einen Auf- oder Abstieg unvorteilhaften Höhenposition befindet.

Es ist daher Aufgabe der vorliegenden Erfindung, die eingangs genannte Bodenbearbeitungsmaschine derart weiterzubilden, dass sie eine bessere Anpassung der Steigeinrichtung an die Physiognomie eines auf dem Bedienstand arbeitenden Erwachsenen oder/und an eine aktuelle Betriebsstellung des Bedienstandes ermöglicht.

Diese Aufgabe löst die vorliegende Erfindung durch eine Bodenbearbeitungsmaschine der eingangs genannten Art, bei welcher die Steigeinrichtung in wenigstens drei für eine Steigbewegung eines Maschinenführers zwischen Bedienstand und Aufstandsuntergrund unterschiedliche steigbereite Betriebsstellungen verstellbar ist, wobei für jedes aus zwei von wenigstens drei längs der Steigachse hintereinander angeordneten Trittstufen gebildete Trittstufenpaar gilt, dass der Abstand zwischen den Trittstufen des jeweiligen Trittstufenpaars in unterschiedlichen steigbereiten Betriebsstellungen betragsmäßig unterschiedlich groß ist.

Die Steigachse ist bevorzugt eine geradlinige Steigachse. Es soll jedoch nicht ausgeschlossen sein, dass die Steigachse eine gekrümmte Steigachse ist, wobei sie dann bevorzugt um eine zu den zueinander bevorzugt parallelen Trittstufen-Längserstreckungsrichtungen parallele Krümmungsachse gekrümmt ist.

Durch die Ausbildung der Steigeinrichtung derart, dass sie in wenigstens drei steigbereite Betriebsstellungen verstellbar ist, von welchen jede einen Aufstieg vom Aufstandsuntergrund auf den Bedienstand sowie einen Abstieg in umgekehrter Richtung erlaubt, kann die Steigeinrichtung wenigstens in groben Zügen erheblich besser an die jeweilige Steigsituation angepasst werden als im Stand der Technik. So kann die Steigeinrichtung an kleine, mittlere und große Körpergrößen oder/und an einen kleinen, mittleren und großen Abstand des Bedienstands vom Aufstandsuntergrund angepasst werden.

Da sich von Betriebsstellung zu Betriebsstellung der Steigeinrichtung die einzelnen Abstände zwischen den wenigstens drei Trittstufen ändern, erfolgt eine Anpassung der Steigeinrichtung an die jeweilige Steigsituation nicht nur zwischen zwei benachbarten Trittstufen sondern über wenigstens drei Trittstufen hinweg. Somit kann die Längenänderung der Steigeinrichtung zwischen zwei Betriebsstellungen auf wenigstens zwei Teillängenänderungen zwischen mehreren Trittstufen, wenigstens einmal zwischen einer vom Aufstandsuntergrund fernliegenden oberen Trittstufe und einer dem Aufstandsuntergrund näher liegenden mittleren Trittstufe und ein weiteres Mal zwischen der mittleren Trittstufe und einer dem Aufstandsuntergrund noch näher liegenden unteren Trittstufe, aufgeteilt werden. Dies ermöglicht gleichmäßigere Abmessungen der einzelnen Abstände und führt folglich zu einer insgesamt ergonomischeren und weniger unfallträchtigen Steigeinrichtung.

Die Bodenbearbeitungsmaschine kann beispielsweise eine Straßenfräse, ein Recycler, ein Surface-Miner, ein Straßenfertiger oder ein Verdichter sein, um nur einige Möglichkeiten zu nennen. Bevorzugt ist die Bodenbearbeitungsmaschine eine Straßenfräse, insbesondere eine Kleinfräse oder Kompaktfräse mit im Heckbereich der Bodenbearbeitungsmaschine angeordnetem Abtragswerkzeug, welches zum Abtrag von Bodenmaterial ausgehend von der Bodenoberfläche ausgebildet ist.

In vorliegender Anmeldung wird die Bodenbearbeitungsmaschine, sofern nicht im Einzelfall etwas Abweichendes ausgesagt ist, als auf einem ebenen, horizontalen Aufstandsuntergrund stehend beschrieben.

Als "Fahrwerk" ist in vorliegender Anmeldung die Gesamtheit aller Laufwerke bezeichnet, also die Gesamtheit aller einzelnen, abrollfähigen Aufstandsbaugruppen, mit welchem die Bodenbearbeitungsmaschine auf dem Aufstandsuntergrund aufsteht. Ein Laufwerk kann als Raupen- oder Kettenlaufwerk eine umlaufende Kette oder als Radlaufwerk ein drehbares Rad aufweisen, um abrollfähig zu sein.

Die Arbeitsvorrichtung kann eine beliebige Arbeitsvorrichtung sein, welche dazu ausgebildet ist, eine Bodenoberfläche oder, von der bestehenden Bodenoberfläche ausgehend, einen Volumenbereich des Bodens zu verändern. Die Arbeitsvorrichtung kann daher eine oberflächentexturierende Vorrichtung, eine Material abtragende oder eine Material auftragende Vorrichtung sein oder eine eine Kombination aus den genannten Funktionen ausübende Vorrichtung sein. Aufgrund der oben bevorzugt genannten Ausgestaltung der vorliegenden Bodenbearbeitungsmaschine umfasst die Arbeitsvorrichtung bevorzugt eine Fräswalze mit einem Fräswalzenrohr, auf deren Mantelfläche eine Mehrzahl von Fräsmeißeln, vorzugsweise auswechselbar, in Meißelhaltern oder Meißelwechselhaltern angeordnet ist.

Die Antriebskraftmaschine kann eine beliebige Maschine zur Umwandlung einer Energieform in eine als Antriebskraft nutzbare andere Energieform sein. Die von der Antriebskraftmaschine bereitgestellte Antriebskraft kann zur Erzielung von Vortrieb für eine Bewegung der Bodenbearbeitungsmaschine oder/und als Antriebskraft der Arbeitsvorrichtung genutzt werden. Vorzugsweise liefert die Antriebskraftmaschine sowohl die Antriebskraft für den Vortrieb der Bodenbearbeitungsmaschine als auch die Antriebskraft für die Arbeitsvorrichtung. In einer ebenso bewährten wie bevorzugten Ausführungsform stellt die Antriebskraftmaschine mit einer Antriebswelle einen Zapfort für kinetische Energie bereit, der bevorzugt durch ein mit der Antriebswelle verbundenes Verteilergetriebe, umfassend einen Haupt- und wenigstens einen Nebenabtrieb, vervielfältigt wird. An einem Abtrieb aus Haupt- und Nebenabtrieb kann weiterhin kinetische Energie in Form einer drehenden Verteilergetriebe-Abtriebswelle bereitgestellt sein. Mit wenigstens einem anderen Abtrieb kann eine Hydraulikpumpe verbunden sein, um an Bord der Bodenbearbeitungsmaschine Hydrauliköl auf einem erhöhten Druckniveau als Energiespeicher für Hydraulikmotoren bereitzustellen. Zusätzlich oder alternativ kann mit einem Abtrieb ein Generator zur Erzeugung elektrischer Energie verbunden sein.

Aufgrund der hohen Energiespeicherdichte von kohlenwasserstoffbasierten Kraftstoffen ist die Antriebskraftmaschine bevorzugt eine Brennkraftmaschine, besonders bevorzugt ein Dieselmotor.

Die Steigachse kann grundsätzlich einen rechten Winkel mit dem Aufstandsuntergrund einschließen. Wegen der resultierenden verbesserten Ergonomie beim Auf- und Absteigen ist die virtuelle Steigachse von einer auf dem Aufstandsuntergrund aufstiegsbereit vor der Steigeinrichtung stehenden, der Steigeinrichtung also zugewandten Person weg geneigt, so dass in Höhenrichtung vom Aufstandsuntergrund aufeinander folgende Trittstufen sowohl orthogonal zur Höhenrichtung als auch orthogonal zu einer in der Regel parallel zum Aufstandsuntergrund verlaufenden Trittstufen-Längserstreckungsrichtung zueinander versetzt angeordnet sind. Die Trittstufen-Längserstreckungsrichtung ist diejenige Richtung, in welcher die Trittstufen ihre größte Abmessung aufweisen. Der Versatz ist dabei bevorzugt derart, dass eine Trittstufe umso weiter von der auf dem Aufstandsuntergrund aufstiegsbereit vor der Steigeinrichtung stehenden Person entfernt angeordnet ist, je weiter die Trittstufe vom Aufstandsuntergrund entfernt ist. Die Neigung der Steigachse relativ zur Normalen auf den Aufstandsuntergrund beträgt bevorzugt zwischen 4° und 10°, besonders bevorzugt zwischen 5° und 8°.

Mit den oben genannten drei unterschiedlichen Betriebsstellungen kann die ebenfalls oben genannte grobe Unterteilung in drei Klassen von Steigsituationen und die Anpassung der Bodenbearbeitungsmaschine an die drei Klassen erfolgen. Damit ist eine erheblich bessere Differenzierung erreicht als bisher im Stand der Technik, gemäß welchem die Steigeinrichtung sich entweder in einem für einen Auf- oder Abstieg steigbereiten Betriebszustand befindet oder in einem nicht-steigbereiten Verstauungszustand. Eine weitere Verbesserung der Anpassbarkeit der vorliegend diskutierten Bodenbearbeitungsmaschine an zahlreiche unterschiedliche Betriebssituationen der Bodenbearbeitungsmaschine kann dadurch erreicht werden, dass die Steigeinrichtung innerhalb ihres Verstellbereichs stufenlos in eine Vielzahl von unterschiedlichen für einen Auf- und Abstieg zwischen Bedienstand und Aufstandsuntergrund steigbereiten Betriebsstellungen verstellbar ist. Dies ist beispielsweise durch Verwendung eines stufenlos verstellbaren Verstellaktuators zur Verstellung der Steigeinrichtung möglich.

In besonderem Maße nutzbar ist der Vorteil einer an unterschiedliche Steigsituationen anpassbaren Steigeinrichtung dann, wenn die selbstfahrende Bodenbearbeitungsmaschine eine Hubvorrichtung umfasst, mittels welcher der Maschinenrahmen höhenveränderlich mit dem Fahrwerk verbunden ist, wobei die Hubvorrichtung dazu ausgebildet ist, den Abstand des Maschinenrahmens relativ zum Fahrwerk zu verändern. Denn dann ändert sich mit einem vertikalen Abstand des Maschinenrahmens vom Fahrwerk in der Regel auch der Abstand des Bedienstandes vom Aufstandsuntergrund.

Bevorzugt umfasst die Hubvorrichtung längenveränderliche Hubsäulen, welche die einzelnen Laufwerke mit dem Maschinenrahmen verbinden. Besonders bevorzugt sind die einzelnen Hubsäulen durch hydraulische Kolben-Zylinder-Anordnungen längenveränderlich. Die hydraulische Energie kann, wie oben geschildert, von Hydraulikpumpen bereitgestellt werden, die von der Antriebskraftmaschine antreibbar sind. Da die Steigeinrichtung vor allem mit dem Ziel verstellbar sein soll, den variablen Abstand zwischen dem Höhenniveau des Bedienstands und dem Abschnitt des Aufstandsuntergrunds zu überbrücken, von welchem aus eine Person auf den Bedienstand aufsteigt oder zu welchem hin eine Person vom Bedienstand absteigt, ist es zur Erzielung einer möglichst einfachen, schnellen und korrekten Anordnung der Steigeinrichtung vorteilhaft, wenn der Verstellaktuator dazu ausgebildet ist, nach Maßgabe einer aufstandsuntergrund-bezogenen Referenz automatisiert derart betrieben zu werden, dass eine vorbestimmte relativ zum Maschinenrahmen bewegliche Trittstufe relativ zum Maschinenrahmen oder/und relativ zum Aufstandsuntergrund in einem vorbestimmten räumlichen Bereich angeordnet ist.

Da dieser Aspekt einer automatisierten Verstellbarkeit der Steigvorrichtung nicht von der Anzahl von drei steigbereiten Betriebsstellungen abhängig ist, sondern auch mit zwei Betriebsstellungen, insbesondere steigbereiten Betriebsstellungen, realisierbar ist, betrifft die vorliegende Offenbarung auch eine selbstfahrende Bodenbearbeitungsmaschine mit
- einem Maschinenrahmen,
- einem den Maschinenrahmen tragenden Fahrwerk, wobei das Fahrwerk wenigstens zwei auf einem Aufstandsuntergrund der Bodenbearbeitungsmaschine abrollbare Laufwerke umfasst,
- eine Arbeitsvorrichtung, welche zur Bearbeitung eines Bodens ausgebildet ist,
- eine Antriebskraftmaschine zur Bereitstellung von Antriebskraft für die Bodenbearbeitungsmaschine,
- einen auf einem Höhenniveau mit Abstand über dem Aufstandsuntergrund an dem Maschinenrahmen angeordneten Bedienstand zur Bedienung der Bodenbearbeitungsmaschine, und
- eine zwischen dem Aufstandsuntergrund und dem Bedienstand angeordnete Steigeinrichtung, welche eine Mehrzahl von Trittstufen aufweist, die längs einer zwischen Aufstandsuntergrund und dem Höhenniveau des Bedienstands verlaufenden und mit dem Aufstandsuntergrund einen Winkel einschließenden virtuellen Steigachse aufeinander folgend angeordnet sind,
wobei die Steigeinrichtung längs der Steigachse längenveränderlich ist und hierzu wenigstens eine der Trittstufen relativ zu wenigstens einer anderen der Trittstufen mittels eines Verstellaktuators verstellbar ist, welche dadurch gekennzeichnet ist, dass der Verstellaktuator dazu ausgebildet ist, nach Maßgabe einer aufstandsuntergrund-bezogenen Referenz automatisiert derart betrieben zu werden, dass eine vorbestimmte relativ zum Maschinenrahmen bewegliche Trittstufe relativ zum Maschinenrahmen oder/und relativ zum Aufstandsuntergrund in einem vorbestimmten räumlichen Bereich angeordnet ist.

In der vorliegenden Anmeldung beschriebene vorteilhafte Weiterbildungen der eingangs genannten Bodenbearbeitungsmaschine sind auch vorteilhafte Weiterbildungen der im vorhergehenden Absatz genannten Bodenbearbeitungsmaschine.

Da es für eine ergonomische Benutzung der Steigeinrichtung für einen Aufstieg oder/und einen Abstieg vor allem auf den Abstand einer vorbestimmten Trittstufe, vorzugsweise der unteren Trittstufe, vom Aufstandsuntergrund ankommt, repräsentiert die aufstandsuntergrund-bezogene Referenz bevorzugt einen Höhenabstand der vorbestimmten Stufe vom Aufstandsuntergrund.

Die aufstandsuntergrund-bezogene Referenz kann eine mechanische Referenz sein, etwa eine körperliche Verbindung der vorbestimmten Trittstufe mit einem Bauteil, welches im Betrieb der Bodenbearbeitungsmaschine eine feste räumliche Zuordnung zum Aufstandsuntergrund aufweist. Ein solches Bauteil kann beispielsweise ein Laufwerk oder eine mit dem Laufwerk zur gemeinsamen Bewegung verbundene Konsole einer Hubsäule der Hubvorrichtung sein.

Die aufstandsuntergrund-bezogene Referenz kann zusätzlich oder alternativ eine sensorische Referenz sein, etwa ein Signal, welches einen Erfassungswert eines Sensors oder mehrerer Sensoren repräsentiert, wobei der Erfassungswert eine Information über die Relativstellung, insbesondere den Höhenabstand, der vorbestimmten Trittstufe vom Aufstandsuntergrund umfasst. Eine solche sensorische Referenz kann eine unmittelbare sensorische Referenz sein, etwa auf Grundlage eines Erfassungssignals eines den Abstand zum Aufstandsuntergrund erfassenden Sensors, welcher entweder zumindest bezüglich seiner Höhenposition ortsfest relativ zur vorbestimmten Trittstufe angeordnet ist oder relativ zur vorbestimmten Trittstufe derart angeordnet ist, dass sich sein Höhenabstand vom Aufstandsuntergrund relativ zum Höhenabstand der vorbestimmten Trittstufe vom Aufstandsuntergrund gemäß einer bekannten vorgegebenen Gesetzmäßigkeit ändert.

Somit umfasst im Sinne der vorliegenden Anmeldung jede einen Abstandswert enthaltende Abstandsinformation eine Information über den Höhenabstand der vorbestimmten Trittstufe vom Aufstandsuntergrund, deren Abstandswert sich nur durch Addition eines vorbestimmten Summanden oder/und durch Multiplikation mit einem vorbestimmten Faktor in den Höhenabstandswert der vorbestimmten Trittstufe vom Aufstandsuntergrund umrechnen lässt. Dies bedeutet beispielsweise, dass auch dann, wenn ein Sensor nicht unmittelbar den Höhenabstand der vorbestimmten Trittstufe und dem Aufstandsuntergrund erfasst, sondern einen Abstand zwischen sich und dem Aufstandsuntergrund, dessen Erfassungssignal aufgrund der ortsfesten Lagebeziehung wenigstens der Sensor-Höhenposition zur Höhenposition der vorbestimmten Trittstufe eine Information über den Höhenabstand der vorbestimmten Trittstufe zum Aufstandsuntergrund enthält.

Eine solche sensorische Referenz kann außerdem eine sensorische Kettenreferenz sein, gemäß welcher die Erfassungssignale mehrerer Sensoren berücksichtigt werden, von welchen keiner unmittelbar die Relativstellung zwischen dem Aufstandsuntergrund einerseits und der vorbestimmten Trittstufe oder dem Sensor selbst andererseits erfasst, wenn die kumulative Berücksichtigung der mehreren Sensorsignale jedoch eine Information über den Höhenabstand der vorbestimmten Trittstufe und dem Aufstandsuntergrund enthält. Beispielsweise kann ein erster Sensor eine Relativstellung des Maschinenrahmens relativ zu dem auf dem Aufstandsuntergrund aufstehenden Fahrwerk erfassen und ein weiterer Sensor kann eine Relativstellung der vorbestimmten Trittstufe relativ zum Maschinenrahmen erfassen. Dann kann aus einer kumulativen Berücksichtigung beider Sensorsignale eine Information über die Relativstellung der vorbestimmten Trittstufe relativ zum Aufstandsuntergrund erhalten werden.

Da dann, wenn eine Hubvorrichtung vorhanden ist, die Hubvorrichtung maßgeblich die durch die Steigeinrichtung zu überwindende Höhe zwischen Aufstandsuntergrund und Bedienstand beeinflusst, ist es für eine möglichst optimale Anpassung der Steigeinrichtung an die jeweilige Steigsituation vorteilhaft, wenn die Steigeinrichtung nach Maßgabe eines Arbeitszustands oder einer Arbeitsstellung der Hubvorrichtung in eine steigbereite Betriebsstellung verstellbar ist. Eine Arbeitsstellung der Hubvorrichtung ist dabei bestimmt durch die relative Anordnung von relativ zueinander beweglichen Bauteilen der Hubvorrichtung. Der Arbeitszustand kann bestimmt sein durch die Bewegung der Hubvorrichtung während einer Änderung des Abstands zwischen Maschinenrahmen und Fahrwerk. Für die Verstellbarkeit der Steigeinrichtung nach Maßgabe des Arbeitszustands oder der Arbeitsstellung der Hubvorrichtung gibt es mindestens zwei konkrete technische Lösungen, welche weiter unten näher ausgeführt werden.

Zur Erleichterung der Konstruktion der Steigeinrichtung kann eine weiter vom Aufstandsuntergrund entfernt gelegene obere der wenigstens drei Trittstufen ortsfest am Maschinenrahmen angeordnet sein. So müssen nicht alle Trittstufen relativ zum Maschinenrahmen beweglich angeordnet sein. Eine maschinenfeste Trittstufe kann auch die Plattform des Bedienstandes selbst sein. Umfasst die Steigeinrichtung k Trittstufen, wobei k eine ganze Zahl größer als oder gleich 3 ist, reicht es folglich aus, wenn höchstens k-1 Trittstufen jeweils sowohl relativ zueinander als auch relativ zu einer maschinenrahmenfesten Trittstufe beweglich angeordnet sind.

Eine erste konstruktive Ausgestaltungsmöglichkeit, die Steigeinrichtung nach Maßgabe eines Arbeitszustands oder einer Arbeitsstellung der Hubvorrichtung in eine steigbereite Betriebsstellung verstellbar vorzusehen, liegt darin, eine Trittstufe, vorzugsweise die näher beim Aufstandsuntergrund gelegene untere der wenigstens drei Trittstufen mittels eines Verbindungsmittels mit einem relativ zum Aufstandsuntergrund höhenunveränderlichen laufwerksseitigen Kopplungsbauteil zu koppeln. Diese Kopplung bzw. das laufwerksseitige Kopplungsbauteil ist eine mechanische beziehungsweise körperliche Referenz, wie sie oben erläutert wurde. Die mit dem laufwerksseitigen Kopplungsbauteil gekoppelte Trittstufe ist dann die oben im Zusammenhang mit der Erläuterung der aufstandsuntergrund-bezogenen Referenz genannte vorbestimmte Trittstufe.

Das laufwerksseitige Kopplungsbauteil kann ein Abschnitt des Laufwerks selbst sein oder kann ein zur gemeinsamen Höhenverlagerung mit dem Laufwerk verbundenes Bauteil umfassen. Das Laufwerk selbst weist als beispielsweise Kettenlaufwerk einen Umlaufkörper auf, an welchem eine Laufkette umlauffähig gelagert ist. Wenngleich es grundsätzlich möglich ist, ist es aufgrund der hieraus resultierenden Belastung nicht vorteilhaft, den Umlaufkörper unmittelbar als das laufwerksseitige Kopplungsbauteil zu nutzen oder mit einem solchen Kopplungsbauteil zu verbinden.

Die oben genannte Hubvorrichtung weist in der Regel an ihrem fahrwerksnäheren Ende eine mit dem Fahrwerk zur gemeinsamen Höhenverlagerung verbundene Konsolenbaugruppe auf. Dies bedeutet, dass in der oben genannten bevorzugten Ausführungsform jede Hubsäule der Hubvorrichtung an ihrem laufwerksnäheren Ende je eine die Hubsäule mit dem Laufwerk verbindende Konsole aufweist. Die Konsole ist üblicherweise um eine zum Aufstandsuntergrund parallele Kippachse relativ zum Laufwerk kippbar, um ein Überfahren von Bodenunebenheiten durch das Laufwerk zu ermöglichen, ohne hierdurch Biegemomente auf die Hubvorrichtung, insbesondere auf die dem Laufwerk jeweils unmittelbar zugeordnete Hubsäule, zu übertragen. Die Konsole, die bevorzugt das Laufwerk gabelartig in Form eines auf dem Kopf stehenden U überspannt, bietet ausreichend Bauraum und kann ausreichend stabil ausgestaltet werden, um sie als das laufwerksseitige Kopplungsbauteil zu verwenden.

Durch die Kopplung der Trittstufe, vorzugsweise der unteren Trittstufe, mit dem laufwerksseitigen Kopplungsbauteil kann dafür gesorgt werden, dass die untere Trittstufe dauerhaft zu dem auf dem Aufstandsuntergrund aufstehenden Laufwerk eine festgelegte räumliche Zuordnung längs einer zum Aufstandsuntergrund orthogonalen Höhenachse aufweist. Diese Höhenachse ist parallel zur Gierachse der selbstfahrenden Bodenbearbeitungsmaschine. Die untere Trittstufe ist deshalb bevorzugt die mit dem laufwerksseitigen Kopplungsbauteil gekoppelte Trittstufe, da sie relativ zum Maschinenrahmen von allen Trittstufen den größten Relativbewegungsweg aufweist.

Die festgelegte räumliche Zuordnung kann eine starre Zuordnung sein, sodass die untere Trittstufe relativ zum laufwerksseitigen Kopplungsbauteil in der Höhenrichtung unbeweglich ist. Vorteilhafter kann es jedoch sein, etwa im Hinblick auf weiter unten geschilderte Arretierungsvorgänge der Steigeinrichtung oder auch im Hinblick auf einen gewissen Spielraum bei der Anpassung der Steigeinrichtung an eine vorgegebene Steigsituation, dass die untere Trittstufe mit einem Bewegungsspiel mit dem laufwerksseitigen Kopplungsbauteil gekoppelt ist. Das Bewegungsspiel weist vorteilhaft einen Bewegungsfreiheitsgrad längs der Steigachse auf. Dann ist die festgelegte räumliche Zuordnung dergestalt, dass die untere Trittstufe einen vorgegebenen Bewegungsbereich längs sowohl der Steigachse wie auch der Höhenachse relativ zum laufwerksseitigen Kopplungsbauteil für die Dauer der Kopplung nicht verlassen kann.

Für Reparatur- oder Wartungszwecke oder auch für besondere Betriebssituationen der Bodenbearbeitungsmaschine kann es vorteilhaft sein, wenn die Kopplung der unteren Stufe mit dem laufwerksseitigen Kopplungsbauteil lösbar und wiederherstellbar ist.

In vorteilhaft einfacher konstruktiver Ausgestaltung kann das Bewegungsspiel zwischen der unteren Trittstufe und dem laufwerksseitigen Kopplungsbauteil dadurch realisiert sein, dass die untere Trittstufe mittels eines nur Zugkraft übertragenden Zugmittels, wie einer Kette, einem Seil oder einem Band, als das Verbindungsmittel mit dem laufwerksseitigen Kopplungsbauteil gekoppelt ist. Die untere Trittstufe oder eine relativ zu einer maschinenfesten Trittstufe bewegliche Trittstufenbaugruppe mit mehreren Trittstufen, einschließlich der unteren Trittstufe, kann dann durch ihre Gewichtskraft das Zugmittel spannen, wobei die untere Trittstufe bzw. die Trittstufenbaugruppe entgegen ihrer Gewichtskraft eine vorbestimmte Strecke angehoben werden kann, ohne dass das Zugmittel das Anheben erschwert oder verhindert. Die Trittstufenbaugruppe kann eine Mehrzahl von oder alle nicht maschinenrahmenfesten Trittstufen umfassen, wobei die Trittstufen der Trittstufenbaugruppe relativ zueinander längs der Steigachse beweglich sein können und vorzugsweise längs der Steigachse beweglich sind.

Beim Anheben des Maschinenrahmens bleibt die von dem Verbindungsmittel relativ zum laufwerkseitigen Kopplungsbauteil in einer Höhenposition oder in einem Höhenbereich gehaltene Trittstufenbaugruppe durch die Gewichtskraft der Trittstufenbaugruppe belastet, sodass der Maschinenrahmen, gegebenenfalls mit einer maschinenrahmenfesten obere Trittstufe, relativ zu einer untersten Trittstufe der längs der Steigachse verlagerbar am Maschinenrahmen gelagerten Trittstufenbaugruppe angehoben werden kann. Vorteilhafterweise ist die Lagerung der Trittstufenbaugruppe am Maschinenrahmen so leichtgängig, dass die Gewichtskraft der Trittstufenbaugruppe ausreicht, um eine Relativbewegung zwischen Trittstufenbaugruppe und Maschinenrahmen zu bewirken. Beim Absenken des Maschinenrahmens wird die Trittstufenbaugruppe durch das Zugmittel in seiner Bewegung zum Aufstandsuntergrund hin begrenzt, sodass beim Absenken des Maschinenrahmens eine Annäherungsbewegung des Maschinenrahmens, insbesondere einer maschinenrahmenfesten oberen Trittstufe, relativ zu einer untersten Trittstufe der Trittstufenbaugruppe stattfindet.

Das Bewegungsspiel der unteren Trittstufe mit Bewegungsfreiheitsgrad längs der Steigachse relativ zum Aufstandsuntergrund kann noch dadurch betragsmäßig vergrößert werden, dass das laufwerksseitige Kopplungsbauteil eine Kopplungsformation aufweist, mit welcher das Verbindungsmittel verbunden ist, wobei die Kopplungsformation relativ zum Laufwerk bzw. relativ zum übrigen laufwerksseitigen Kopplungsbauteil mit einer Bewegungskomponente längs der Steigachse beweglich ist. Beispielsweise kann die Kopplungsformation einen Vorsprung oder eine Ausnehmung, insbesondere eine Durchgangsöffnung, oder eine Öse umfassen, an welcher das Verbindungsmittel festgelegt oder festlegbar ist, wobei die Kopplungsformation relativ zum übrigen laufwerksseitigen Kopplungsbauteil beweglich, vorzugsweise schwenkbar ist. Bevorzugt ist die Kopplungsformation relativ zu dem zum übrigen laufwerksseitigen Kopplungsbauteil um eine zum Aufstandsuntergrund parallele Klappachse schwenkbar, sodass die Kopplungsformation mit einer vorgegebenen Schwenkbewegung einen möglichst großen Höhenunterschied längs der Steigachse zurückgelegen kann. Selbstverständlich kann die Kopplungsformation auch translatorisch relativ zum übrigen laufwerksseitigen Kopplungsbauteil beweglich sein, wobei eine translatorische Beweglichkeit jedoch in der Regel eine aufwändigere Bewegungsführung erfordert als die zuvor beschriebene Schwenkbeweglichkeit und daher weniger stark bevorzugt ist.

Dann, wenn die relativ zum Maschinenrahmen bewegliche untere der wenigstens drei Trittstufen mit dem laufwerksseitigen Kopplungsbauteil gekoppelt ist, kann eine Höhenverlagerung des Maschinenrahmens relativ zum Fahrwerk unmittelbar zur Längenänderung der Steigeinrichtung genutzt werden. Dies ist eine konkrete Möglichkeit, die Längenänderung der Steigeinrichtung und damit die Verstellung der Steigeinrichtung in einen für einen Auf- und Abstieg steigbereiten Betriebszustand nach Maßgabe eines Arbeitszustands oder einer Arbeitsstellung der Hubvorrichtung zu bewirken.

Wegen der Verknüpfung einer Hubbewegung des Maschinenrahmens relativ zum Fahrwerk mit einer Verstellbewegung der Steigeinrichtung relativ zum Maschinenrahmen kann dann die Hubvorrichtung bevorzugt der Verstellaktuator der Steigeinrichtung sein. Somit ist über die ohnehin bei bestimmten Arten von Bodenbearbeitungsmaschinen vorgesehene Hubvorrichtung hinaus kein eigener Verstellaktuator zur Verstellung der Steigeinrichtung notwendig.

Aus Gründen einer möglichst vorteilhaften Ergonomie der längenveränderlichen Steigeinrichtung in wenigstens einer Mehrzahl von ihren Betriebszuständen ist bevorzugt vorgesehen, dass eine weiter vom Aufstandsuntergrund entfernt gelegene obere der wenigstens drei Trittstufen und eine näher beim Aufstandsuntergrund gelegene untere der wenigstens drei Trittstufen über einen Bewegungssynchronisierungsmechanismus kinematisch derart miteinander gekoppelt sind, dass sich die längs der Steigachse zwischen je zwei unmittelbar benachbarten Trittstufen aufeinander folgenden Trittstufenabstände in einer Mehrzahl unterschiedlicher Betriebszustände, bezogen auf den größten Abstand, betragsmäßig um nicht mehr als 10 % unterscheiden. Die obere Trittstufe kann maschinenfest sein. Die untere Trittstufe ist bevorzugt die oben genannte mit dem laufwerksseitigen Kopplungsbauteil gekoppelte untere Trittstufe.

Somit können längs der Steigachse aufeinanderfolgende Abstände zwischen Trittstufen eine nahezu gleiche Abmessung aufweisen, was der Ergonomie und dem Komfort bei der Benutzung der Steigeinrichtung dient. Vorzugsweise unterscheiden sich die längs der Steigachse aufeinander folgenden Abstände zwischen je zwei Trittstufen um nicht mehr als 5 %, besonders bevorzugt sind die Abstände betragsmäßig gleich.

Bevorzugt ist eine Trittstufe ohne Zwischenanordnung einer weiteren Trittstufe als Leit-Trittstufe unmittelbar mit dem Verstellaktuator zur Bewegung gekoppelt. Diese Kopplung kann, muss aber nicht, ein von "1" verschiedenes Übertragungsverhältnis definieren, mit welchem die Bewegung des Verstellaktuators auf die Leit-Trittstufe übertragen wird. Durch den Bewegungssynchronisierungsmechanismus werden die Bewegungen weiterer relativ zum Maschinenrahmen beweglicher Trittstufen von der Bewegung der Leit-Stufe abgeleitet. Dann etwa, wenn eine Trittstufe, wie oben beschrieben, mit dem laufwerksseitigen Kopplungsbauteil gekoppelt ist und folglich die Hubvorrichtung den Verstellaktuator bildet, ist die mit dem laufwerksseitigen Kopplungsbauteil gekoppelte Trittstufe die Leit-Trittstufe, also bevorzugt die untere, besonders bevorzugt die unterste der wenigstens drei Trittstufen.

Bewegungssynchronisierungsmechanismen, die eine Bewegung von mehreren Bauteilen längs einer Bewegungsachse mit paarweise gleichen Bauteilabständen längs der Bewegungsachse gestatten, sind beispielsweise von teleskopierbaren Bauteilanordnungen bekannt. Grundsätzlich kann auch die Steigeinrichtung der vorliegend diskutierten Bodenbearbeitungsmaschine einen teleskopierbaren Mechanismus derart aufweisen, dass für wenigstens zwei der wenigstens drei Trittstufen gilt, dass eine Trittstufe zur Bewegung längs der Steigachse an einer ihr längs der Steigachse unmittelbar benachbarten Trittstufenanordnung geführt ist. Eine Trittstufenanordnung kann dabei eine Trittstufe und wenigstens ein die Trittstufe lagerndes Seitenbauteil umfassen. Vorzugsweise umfasst eine Trittstufenanordnung eine Trittstufe und zwei mit Abstand voneinander die Trittstufe lagernde Seitenbauteile. Beispielsweise kann eine erste relativ zum Maschinenrahmen bewegliche Trittstufenanordnung, welche eine erste bewegliche Trittstufe aufweist, am Maschinenrahmen längs der Steigachse beweglich gelagert sein. Eine zweite Trittstufenanordnung, welche eine zweite bewegliche Trittstufe aufweist, die längs der Steigachse auf die erste bewegliche Trittstufe folgt, kann an der ersten beweglichen Trittstufenanordnung längs der Steigachse beweglich gelagert sein. Weist die Steigeinrichtung nur zwei bewegliche Trittstufen auf, dann kann die zweite bewegliche Trittstufe die unterste Trittstufe sein. Ansonsten kann eine dritte Trittstufenanordnung mit einer dritten beweglichen Trittstufe in Fortsetzung der oben beschriebenen Folgeanordnung an der zweiten Trittstufenanordnung längs der Steigachse beweglich gelagert sein, wobei die zweite bewegliche Trittstufe längs der Steigachse zwischen der ersten und der dritten beweglichen Trittstufe angeordnet ist, usw.

Gegenüber einer oben geschilderten teleskopierbaren Bauweise der Steigeinrichtung ist eine schlankere Bauweise bevorzugt, gemäß welcher eine relativ zum Maschinenrahmen bewegliche Führungs-Trittstufe, das ist bevorzugt die Leit-Trittstufe, mittels eines Führungsgestänges beweglich am Maschinenrahmen gelagert ist, wobei wenigstens zwei weitere relativ zum Maschinenrahmen und relativ zur Führungs-Trittstufe bewegliche Trittstufen, unmittelbar am Führungsgestänge relativ zu diesem beweglich gelagert sind. Das Führungsgestänge kann zwei parallele Holme umfassen, zwischen welchen sich die Trittstufen unter Überbrückung des Abstands der Holme erstrecken.

Der Bewegungssynchronisierungsmechanismus kann beispielsweise eine Kaskade von Flaschenzügen aufweisen. Jede Trittstufenanordnung kann dabei starr mit einer Flasche der Flaschenzugkaskade gekoppelt sein, wobei jede Flasche ein Seil genau einmal umlenkt, welches einenends maschinenrahmenfest und andernends mit der Flasche einer längs der Steigachse unmittelbar folgenden Trittstufenanordnung fest verbunden ist. Hierdurch kann bei k beteiligten Trittstufen eine kinematische Spreizung der beteiligten Trittstufen voneinander derart erreicht werden, dass der Bewegungsweg der Trittstufe an einem Ende der Flaschenzugkaskade nur das 2^{-k}-Fache bzw. den 2^{k}-ten Bruchteil des Bewegungswegs der Trittstufe am anderen Ende der Flaschenzugkaskade beträgt. Bevorzugt ist die unterste Trittstufe jene mit dem 2^{-k}-fachen Bewegungsweg und ist die am weiteste vom Aufstandsuntergrund entfernte Trittstufe die den Bewegungsweg vorgebende Trittstufe. Die "Flasche" der maschinenrahmenfesten Trittstufe ist selbst maschinenrahmenfest, kann also durch eine bloße Umlenkrolle gebildet sein.

Alternativ oder zusätzlich kann der Bewegungssynchronisierungsmechanismus ein Scherengetriebe umfassen, wie sie von Scherenhubwerkzeugen bekannt sind. Ein solches Scherengetriebe weist eine Mehrzahl von Getriebescheren auf, welche jeweils zwei scherenartig in ihrem Längsmittelbereich durch ein Scherengelenk gelenkig miteinander verbundene Scherenlenker aufweisen. Jeder Scherenlenker einer Getriebeschere ist an seinem Längsende gelenkig mit einem Scherenlenker einer benachbarten Getriebeschere durch ein Verbindungsgelenk derart verbunden, dass bei Relativverdrehung zweier Scherenlenker derselben Getriebeschere alle Scherenlenker aller verbundenen Getriebescheren relativ zueinander um ihr Scherengelenk rotieren. Die Abstände von in einer Getriebescheren-Folgerichtung aufeinander folgenden Scherengelenke oder/und Verbindungsgelenke können so bei Betätigung des Scherengetriebes gleichmäßig verändert werden. Koppelt man die einzelnen relativ zum Maschinenrahmen beweglichen Trittstufen zur gemeinsamen Bewegung längs der Getriebescheren-Folgerichtung mit den Scherengelenken oder/und den Verbindungsgelenken, können diese äquidistant aufeinander zu und voneinander weg bewegt werden.

Gemäß einer möglichen weiteren Ausgestaltungsform kann der Bewegungssynchronisierungsmechanismus eine um eine zur Steigachse orthogonale Bewegungsachse bewegbare Übertragungsanordnung umfassen, wobei wenigstens ein Teil der relativ zum Maschinenrahmen längs der Steigachse beweglichen Trittstufen jeweils mit der Übertragungsanordnung derart bewegungsübertragend verbunden ist, dass eine Bewegung der Übertragungsanordnung um die Bewegungsachse mit einer Verstellbewegung der jeweiligen Trittstufe längs der Steigachse korreliert. Die Bewegung des Verstellaktuators wird auf die Übertragungsanordnung und von dort mit einem jeweils anderen Übertragungsverhältnis auf jede aus einer Mehrzahl der relativ zum Maschinenrahmen längs der Steigachse beweglichen, mit der Übertragungsanordnung gekoppelten Trittstufen übertragen. Im bevorzugten Fall der Verwendung der Hubvorrichtung als dem Verstellaktuator der Steigeinrichtung ist bevorzugt die mit dem laufwerksseitigen Kopplungsbauteil gekoppelte untere Trittstufe die Leit-Trittstufe. Auch bei Verwendung eines gesondert von der Hubvorrichtung vorgesehenen Verstellaktuators ist die Leit-Trittstufe bevorzugt eine längs der Steigachse endseitige Trittstufe, etwa die untere Trittstufe, wenngleich diese dann nicht mit einem laufwerksseitigen Kopplungsbauteil gekoppelt zu sein braucht.

Eine Verstellbewegung des Verstellaktuators, insbesondere eine Hubbewegung des Maschinenrahmens, führt dann zu einer Relativbewegung zwischen dem Maschinenrahmen, etwa der maschinenrahmenfesten oberen Trittstufe oder/und dem Bedienstand, und der Leit-Trittstufe, insbesondere der mit dem laufwerksseitigen Kopplungsbauteil gekoppelten unteren Trittstufe als der Leit-Trittstufe. Diese aktuatorinduzierte Relativbewegung wird auf die Übertragungsanordnung übertragen, erforderlichenfalls unter Anwendung einer Bewegungsüber- oder Bewegungsuntersetzung. Durch Bewegungskopplung der übrigen relativ zum Maschinenrahmen beweglichen Trittstufen mit der Übertragungsanordnung wird die Relativbewegung der Leit-Trittstufe relativ zum Maschinenrahmen durch die Bewegung der Übertragungsanordnung nach Maßgabe einer für die jeweilige Bewegungskopplung der einzelnen Trittstufe charakteristischen Abmessung auf die jeweilige weitere relativ zum Maschinenrahmen bewegliche Trittstufe übertragen. Die charakteristische Abmessung der Bewegungskopplung der einzelnen Trittstufe mit der Übertragungsanordnung bestimmt somit ein Übertragungsverhältnis, mit welchem die Bewegung der Übertragungsanordnung auf die jeweilige Trittstufe übertragen wird. Wenigstens ein Teil der längs der Steigachse mit zunehmendem Abstand von der Leit-Trittstufe angeordneten Trittstufen ist mit der Übertragungsanordnung unter Anwendung einer jeweils anderen charakteristischen Abmessung der Bewegungskopplung gekoppelt. Die Bewegungsachse ist bevorzugt maschinenrahmenfest.

In einer Ausgestaltungsform kann die Übertragungsanordnung einen um eine Schwenkachse als der Bewegungsachse schwenkbaren Schwenkhebel umfassen oder ein solcher Schwenkhebel sein. Die oben genannten übrigen relativ zum Maschinenrahmen beweglichen Trittstufen sind am Schwenkhebel angelenkt, etwa durch Seile, Ketten, Bänder oder Stangen, wobei die oben genannte charakteristische Abmessung der Bewegungskopplung in der vorliegenden Ausführungsform der Abstand des Anlenkortes einer Trittstufe am Schwenkhebel von der Schwenkachse des Schwenkhebels und somit der dieser Trittstufe zugeordnete Hebelarm ist.

Für die oben genannten übrigen relativ zum Maschinenrahmen beweglichen, am Schwenkhebel angelenkten Trittstufen gilt, dass die Reihenfolge der Anlenkorte der Trittstufen in Richtung von der Schwenkachse weg der Reihenfolge der relativ zum Maschinenrahmen beweglichen Trittstufen in Richtung zum Aufstandsuntergrund hin entspricht. Die Länge des für eine Trittstufe am Schwenkhebel jeweils wirksamen Hebelarms steigt mit abnehmendem Abstand der Trittstufe vom Aufstandsuntergrund.

Zusätzlich oder alternativ kann die Übertragungsanordnung eine um eine Rotationsachse als der Bewegungsachse drehbare Rotationsbaugruppe umfassen oder sein. Die Rotationsbaugruppe umfasst eine Mehrzahl von gemeinsam drehenden Rotationskörpern unterschiedlichen Durchmessers, wobei wenigstens ein Teil der oben genannten übrigen relativ zum Maschinenrahmen beweglichen Trittstufen mit jeweils einem Rotationskörper eines anderen Eingriffsumfangs zur gemeinsamen Bewegung gekoppelt ist, etwa durch Seile, Ketten, Riemen, insbesondere Zahnriemen oder Bänder. Wenigstens ein Teil der Rotationskörper kann daher als Zahnräder ausgebildet sein. In diesem Falle kann die aktuatorinduzierte Verstellbewegung der Leit-Trittstufe über ein geeignetes Übertragungsmittel, wie Kette, insbesondere Rollenkette, Zahnstange, Zahnriemen, Reibstange, Reibriemen usw. auf einen Leit-Rotationskörper übertragen werden, welcher drehfest mit den übrigen Rotationskörpern gekoppelt ist und gemeinsam mit diesen mit gemeinsamer Winkelgeschwindigkeit um die Rotationsachse dreht. Das Übertragungsmittel kann beispielsweise längs eines Seitenteils an dem Seitenteil angeordnet sein, mittels welchem die Leit-Trittstufe relativ zum Maschinenrahmen verlagerbar am Maschinenrahmen gelagert ist.

Da die Leit-Trittstufe üblicherweise zwischen zwei Seitenteilen angeordnet ist und den Abstand zwischen beiden Seitenteilen überspannt, kann aus Gründen einer bevorzugten symmetrischen Krafteinleitung in die Rotationsbaugruppe an jedem Seitenteil je ein Übertragungsmittel angeordnet sein. Der Leit-Rotationskörper ist wegen der formschlüssigen Kraftübertragung bevorzugt ein Zahnrad, kann aber auch ein Reibrad sein.

Die oben genannte charakteristische Abmessung der Bewegungskopplung ist in der vorliegenden Ausführungsform die Durchmesserabmessung oder die zur Durchmesserabmessung proportionale Umfangsabmessung eines Eingriffsumfangs eines Rotationskörpers.

Der Rotationskörper kann, abhängig vom Drehsinn der Rotationsbaugruppe, an seinem Eingriffsumfang ein den Rotationskörper mit der jeweiligen Trittstufe verbindendes Verbindungsmittel auf- und abwickeln und dadurch einen Abstand der jeweiligen Trittstufe zur Rotationsachse und folglich relativ zum Maschinenrahmen verändern. Alternativ kann der Eingriffsumfang mit Verzahnung ausgebildet sein und in kämmendem Formschlusseingriff mit einer relativ zu der jeweiligen gekoppelten Trittstufe ortsfesten, relativ zum Maschinenrahmen jedoch beweglichen Gegenverzahnungsformation, wie etwa Zahnriemen, Zahnstange oder (Rollen-)Kette, stehen und so ebenfalls durch Drehung um die Rotationsachse einen Abstand der jeweiligen Trittstufe zur Rotationsachse verändern. Unterschiedliche Durchmesserabmessungen der Rotationskörper bzw. Umfangsabmessungen der Eingriffsumfänge führen zu einer zwar gleichgerichteten, aber betragsmäßig unterschiedlichen Relativbewegung der mit der Rotationsbaugruppe gekoppelten Trittstufen längs der Steigachse.

Im bevorzugten Fall der Verwendung der Hubvorrichtung als der Verstellaktuator der Steigeinrichtung gilt für die oben genannten übrigen relativ zum Maschinenrahmen beweglichen, mit der Rotationsbaugruppe gekoppelten Trittstufen, dass der Durchmesser des Eingriffsumfangs eines mit einer Trittstufe gekoppelten Rotationskörpers mit zunehmendem Abstand der Trittstufe vom Aufstandsuntergrund sinkt. Die Reihenfolge der mit Rotationskörpern mit zunehmenden Eingriffsumfängen gekoppelten Trittstufen stimmt mit der Reihenfolge der Anordnung der Trittstufen in Richtung auf den Aufstandsuntergrund zu überein.

Der Bewegungssynchronisierungsmechanismus kann nur aus einem der oben genannten Ausführungsbeispiele gebildet sein oder kann eine Mischform der oben genannten Ausführungsbeispiele umfassen, je nach den Bauraumgegebenheiten und kinematischen Erfordernissen des Einzelfalls.

Alternativ zur Nutzung der Hubvorrichtung als Verstellaktuator kann der Verstellaktuator ein gesondert von der Hubvorrichtung ausgebildeter Verstellaktuator sein.

Zur Ausbildung des Verstellaktuators, nach Maßgabe einer aufstandsuntergrund-bezogenen Referenz automatisiert derart betrieben zu werden, dass eine vorbestimmte relativ zum Maschinenrahmen bewegliche Trittstufe relativ zum Maschinenrahmen oder/und relativ zum Aufstandsuntergrund in einem vorbestimmten räumlichen Bereich angeordnet ist, kann die Bodenbearbeitungsmaschine einen Abstandssensor aufweisen, welcher einen Höhenabstand der vorbestimmten Trittstufe zum Aufstandsuntergrund erfasst und ein Sensorsignal mit einer entsprechenden, den Abstand repräsentierenden Information an eine Steuervorrichtung des Verstellaktuators ausgibt. Die den Betrieb des Verstellaktuators steuernde Steuervorrichtung ist dann bevorzugt dazu ausgebildet, den Verstellaktuator nach Maßgabe des Sensorsignals zu steuern. So kann die Steigeirichtung derart verstellt werden, dass ein dem Aufstandsuntergrund nächstgelegenes unteres Ende der Steigeinrichtung oder/und die vorbestimmte Trittstufe einen vorbestimmten Abstand zum Aufstandsuntergrund aufweist oder in einem vorbestimmten, vom Aufstandsuntergrund entfernt gelegenen Abstandsbereich angeordnet ist.

Der Abstandssensor ist bevorzugt ortsfest zum unteren Ende der Steigeinrichtung oder/und zur vorbestimmten Trittstufe angeordnet, so dass sein Erfassungssignal unmittelbar eine Information über den Höhenabstand des unteren Endes der Steigvorrichtung oder der vorbestimmten Trittstufe enthält.

Ein Vorteil in dieser Lösung liegt darin, dass der Abstandssensor den Abstand zu einem unmittelbar unter der Steigeinrichtung gelegenen Bereichs des Aufstandsuntergrunds erfassen kann. Aufgrund der Entfernung der Steigeinrichtung von den jeweiligen Laufwerken der Bodenbearbeitungsmaschine kann nämlich der unmittelbar unter der Steigeinrichtung gelegene Bereich des Aufstandsuntergrunds einen Höhenunterschied zum Aufstandsuntergrund unter den Laufwerken aufweisen, sei es durch eine bereits durchgeführte Bodenbearbeitung oder sei es aufgrund einer lokalen Bodenformation.

Ebenso kann eine den Betrieb des gesondert von der Hubvorrichtung ausgebildeten Verstellaktuators steuernde Steuervorrichtung dazu ausgebildet sein, den Verstellaktuator nach Maßgabe einer Arbeitszustands- oder/und Arbeitsstellungsinformation der Hubvorrichtung zu betreiben. Hierzu kann die Hubvorrichtung mit wenigstens einem Sensor versehen sein, welcher den Arbeitszustand oder/und die Arbeitsstellung der Hubvorrichtung erfasst und an die Steuervorrichtung ein entsprechendes Erfassungssignal ausgibt. Zusätzlich kann ein Sensor vorhanden sein, welcher die Relativstellung der Steigeinrichtung zum Maschinenrahmen erfasst.

Zur Erzielung der ergonomisch vorteilhaften möglichst gleichen längs der Steigachse aufeinanderfolgenden Abstände zwischen zwei Trittstufen kann der gesonderte Verstellaktuator eine längs einer Aktuatorachse ausfahrbare und einziehbare mehrteilige Teleskop-Aktuatorstange mit synchron ausfahrbaren und einziehbaren Teleskop-Aktuatorteilstangen aufweisen, wobei jede Teleskop-Aktuatorteilstange mit einer anderen Trittstufe zur gemeinsamen Bewegung gekoppelt ist. Der Verstellaktuator kann ein elektrischer Aktuator sein, beispielsweise ein elektrisch angetriebener Spindeltrieb. Der Verstellaktuator kann alternativ ein hydraulischer Aktuator sein. Sowohl für elektrisch mit Spindeltrieb angetriebene als auch für hydraulisch angetriebene Teleskop-Aktuatorstangen sind entsprechende Synchronisierungssteuerungen zur Bewegungssynchronisierung der einzelnen Teleskop-Aktuatorteilstangen im Stand der Technik bekannt.

Die Bewegungssynchronisierungseinrichtung kann unabhängig von ihrer konkreten konstruktiven Ausgestaltung mit einem beliebigen Verstellaktuator kombiniert sein, also sowohl mit der als Verstellaktuator verwendeten Hubvorrichtung als auch mit einem gesonderten Verstellaktuator, welcher nur zur Verstellung der Steigeinrichtung vorgesehen ist, als auch mit einem Verstellaktuator, welcher zusätzlich zur Verstellung der Steigeinrichtung noch eine andere Zusatzfunktion als das Heben und Senken des Maschinenrahmens ausführt.

Gemäß einer bevorzugten Weiterbildung der Erfindung ist die obere Trittstufe der wenigstens drei relativ zueinander längs der Steigachse beweglichen Trittstufen die oberste Trittstufe der Steigeinrichtung. Dies muss jedoch nicht so sein. Es können durchaus zwei maschinenfeste Trittstufen vorgesehen sein, von welchen eine die oberste und eine die zweitoberste ist.

Zur Erzielung einer möglichst langen und damit über einen möglichst großen Verstellbereich längenveränderlichen Steigeinrichtung ist es gemäß einer bevorzugten Weiterbildung der Erfindung bevorzugt, wenn die untere Trittstufe der wenigstens drei Trittstufen die unterste Trittstufe der Steigeinrichtung ist.

Bevorzugt umfasst die Steigeinrichtung mehr als drei Trittstufen. Ebenso bevorzugt umfasst die Steigeinrichtung zur bequemen Überwindung auch größerer Abstände des Höhenniveaus des Bedienstands vom Aufstandsuntergrund mehr als zwei nichtmaschinenrahmenfeste Trittstufen, welche sowohl relativ zueinander als auch relativ zum Maschinenrahmen längs der Steigachse beweglich angeordnet sind.

Zur Sicherung der Steigeinrichtung in einer vorbestimmten Stellung kann die Steigeinrichtung in der wenigstens einen vorbestimmten Stellung arretierbar sein. Bevorzugt kann die Arretierung durch einen Nocken-Kurven-Mechanismus realisiert sein, wobei an einem Bauteil aus Maschinenrahmen und einem relativ zum Maschinenrahmen längs der Steigachse beweglichen Abschnitt der Steigeinrichtung ein Nocken und am jeweils anderen Bauteil eine Steuerkurve ausgebildet ist. Bei Annäherung von Nocken und Steuerkurve aneinander ist der Nocken dazu ausgebildet, relativ zur Steuerkurve längs der Steuerkurve an dieser entlang zu gleiten oder an dieser abzurollen. Eine Formation aus Nocken und Steuerkurve ist in eine Anlage-Vorspannrichtung vorgespannt, sodass eine Anlage des Nockens an der Steuerkurve während einer Relativbewegung von Nocken und Steuerkurve sichergestellt ist. Wenn der Nocken sich längs der Steuerkurve gleitend oder rollend an dieser entlang bewegt, ist die vorgespannte Formation gegen die Vorspannwirkung auslenkbar. Bevorzugt ist die vorgespannte Formation in eine Ruhestellung vorgespannt, aus der sie in zwei entgegengesetzte Richtungen gegen die Vorspannwirkung auslenkbar ist. Die Steuerkurve weist eine vom Nocken hintergreifbare Rastformation auf, in welche der Nocken aufgrund der Vorspannwirkung der vorgespannten Formation bei Erreichen einer vorbestimmten Relativposition relativ zur Steuerkurve selbstständig eingreift.

Die Steuerkurve kann außerdem derart ausgestaltet sein, dass nach einem Erreichen der Verrastung durch Fortsetzen der Relativbewegung im gleichen Bewegungssinn der Nocken durch einen Löseabschnitt der Kurvenkontur, an welchem der Nocken bei fortgesetzter Relativbewegung entlanggleitet, aus der Rastformation hinausbewegt wird.

Bevorzugt weist die Steuerkurve einen die Rastformation umgehenden Rückstellabschnitt auf, an welchem der Nocken nach Verlassen der Rastformation und bei Umkehr der Relativbewegung zwischen Steuerkurve und Nocken zur Anlage kommt, sodass nach Bewegungsumkehr die Steigeinrichtung ohne Verrastung in der vorbestimmten Stellung in ihre Ausgangsstellung vor Verrastung zurück bewegt werden kann.

Die vorliegende Erfindung mit nachfolgend anhand der beiliegenden Zeichnungen näher beschrieben werden. Es stellt dar:
- Fig. 1: eine schematische perspektivische Ansicht einer erfindungsgemäßen Ausführungsform einer Kleinfräse von schräg hinten,
- Fig. 2: die Steigeinrichtung der Kleinfräse von Fig. 1 mit einem Abschnitt des Maschinenrahmens der Kleinfräse in Alleinstellung,
- Fig. 3: die Steigeinrichtung von Fig. 2 längs der Längsrichtung der zueinander parallelen Trittstufen,
- Fig. 4: die Kopplungssituation der untersten Trittstufe der Steigeinrichtung der Fig. 1 bis 3 mit einem laufwerksseitigen Kopplungsbauteil in einer Betriebsstellung, in welcher der Maschinenrahmen der Kleinfräse relativ zur Steigeinrichtung anhebbar ist, und
- Fig. 5: die Kopplungssituation von Fig. 4 mit relativ zur Steigeinrichtung maximal angehobenem Maschinenrahmen.

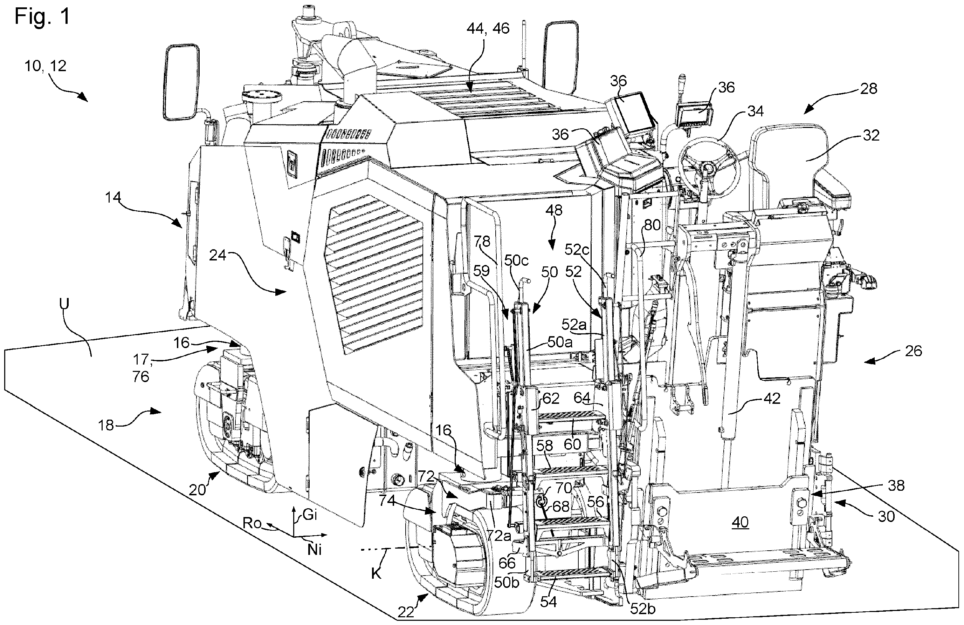

In Figur 1 ist eine erfindungsgemäße Ausführungsform einer selbstfahrenden Bodenbearbeitungsmaschine 10 in Gestalt einer Kleinfräse 12 perspektivische Ansicht von schräg hinten dargestellt. Die Kleinfräse 12 umfasst einen Maschinenrahmen 14, welcher durch hydraulische Hubsäulen 16 mit einem Fahrwerk 18 höhenverstellbar verbunden ist. Von dem Fahrwerk 18 sind in Figur 1 ein vorderes linkes Kettenlaufwerk 20 und ein hinteres linkes Kettenlaufwerk 22 dargestellt. Vordere und hintere rechte Kettenlaufwerke sind ebenfalls vorhanden, jedoch in Figur 1 durch den Maschinenrahmen 14 verdeckt. Die insgesamt vier Hubsäulen 16, von welchen aufgrund der gewählten Perspektive nur die linken beiden Hubsäulen dargestellt sind, bilden eine Hubvorrichtung 17. Das nicht dargestellte rechte hintere Kettenlaufwerk ist in der Regel zwischen einer in Fahrzeugquerrichtung unmittelbar neben der Arbeitsvorrichtung 30 gelegenen Normalbetriebsposition und einer vor der Normalbetriebsposition sowie näher bei einer vertikalen Maschinen-Längsmittelebene gelegenen Randbearbeitungsposition um eine gierachsenparallele Schwenkachse verschwenkbar.

In Figur 1 ist die Kleinfräse 12 auf einem ebenen horizontalen Aufstandsuntergrund U aufstehend dargestellt. Ein Koordinaten-Dreibein stellt ein fahrzeugeigenes Koordinatensystem dar mit einer zum Aufstandsuntergrund U orthogonalen Gierachse Gi, welche parallel zur Hochachse der Kleinfräse 12 verläuft, mit einer in Fahrzeugquerrichtung verlaufenden Nickachse Ni und mit einer in Fahrzeuglängsrichtung verlaufenden Rollachse Ro. Die Pfeilspitzen am Koordinaten-Dreibein weisen für die Gierachse Gi vom Aufstandsuntergrund weg, für die Rollachse Ro in Vorwärtsfahrtrichtung und für die Nickachse Ni von einer in Figur 1 dem Betrachter zugewandten Antriebsseite 24 weg zu einer entgegengesetzten Nullseite 26 der Kleinfräse 12 hin.

Die Kleinfräse 12 ist von einem gegenüber dem Aufstandsuntergrund U erhöhten Bedienstand 28 aus steuerbar. Dies bedeutet, sowohl der Bewegungsbetrieb zur Ortsveränderung der Kleinfräse 12 auf dem Aufstandsuntergrund U als auch ein Bodenbearbeitungsbetrieb mit einer unter dem Bedienstand 28 angeordneten Arbeitsvorrichtung 30 sind vom Bedienstand 28 aus steuerbar. Auch die Hubvorrichtung 17 ist über den Bedienstand 28 steuerbar. Der Bedienstand weist zur Steuerung der Kleinfräse 12 beispielsweise einen Fahrersitz 32, ein Lenkrad 34 und Bedienkonsolen 36 mit Eingabe- und Ausgabemitteln und einer Steuervorrichtung auf.

Die Arbeitsvorrichtung 30 umfasst eine Fräswalze, welche um eine zur Nickachse Ni parallele Fräsachse drehbar in einem Fräswalzenkasten 38 aufgenommen ist. Von hinten blickt man auf den Abstreiferschild 40 als einer heckseitigen Wandung des Fräswalzenkastens 38. Der Abstreiferschild 40 ist durch eine Hydraulik-Kolben-Zylinderanordnung 42 relativ zum Maschinenrahmen 14 vom Aufstandsuntergrund U weg anhebbar und zum Aufstandsuntergrund U hin absenkbar.

In einem längs der Rollachse Ro vor dem Bedienstand 28 gelegenen Bereich befindet sich unter einer Abdeckung 44 eine Antriebskraftmaschine 46 in Gestalt einer Diesel-Brennkraftmaschine, welche die Antriebskraft für eine Fahrbewegung der Kleinfräse 12 auf dem Aufstandsuntergrund U sowie die Antriebskraft für die Arbeitsvorrichtung 30, für die Hubvorrichtung 17 und auch für Aktuatoren, wie die Kolben-Zylinder-Anordnung 42 liefert. Jedes Laufwerk 20, 22 des Fahrwerks 18 ist durch einen Hydromotor hydraulisch antreibbar.

Die Seite 24 der Kleinfräse 12 heißt "Antriebsseite", da auf dieser Seite die Antriebskraft mittels eines Riementriebs und weiter mittels eines Zahnradgetriebes von der Antriebskraftmaschine 46 zur Arbeitsvorrichtung 30 übertragen wird. Die Arbeitsvorrichtung 30 ist daher bezüglich der Quermitte der Kleinfräse 12 längs der Nickachse Ni asymmetrisch derart angeordnet, dass sie nahezu an die der Antriebsseite gegenüberliegende "Nullseite" 26 heranreicht, sodass im bevorzugten Anwendungsbeispiel der Straßen-Kleinfräse 12 eine von der Arbeitsvorrichtung 30 erzeugte Fräskante bezüglich ihrer Nickachsen-Koordinate etwa mit der nullseitigen Seitenwand des Fräswalzenkastens 38 zusammenfällt.

Der Bedienstand 28 ist vom Aufstandsuntergrund U aus über eine leiterartige Steigeinrichtung 48 erreichbar und umgekehrt. Die Steigeinrichtung 48 umfasst zwei parallele Seitenteile 50 und 52, welche beispielhaft starre Seitenholme 50a und 52a, etwa in Gestalt von Stahlprofilen, aufweisen. An den parallelen Seitenteilen 50 und 52 sind drei relativ zum Maschinenrahmen 14 bewegliche Trittstufen 54, 56, 58 derart gehaltert, dass sie den Abstand zwischen den Seitenteilen 50 und 52 überbrücken.

Eine unterste Trittstufe 54 ist über elastomere und daher verformbare Seitenwangen 50b und 52b an die starren Seitenholme 50a und 52a angeschlossen, sodass die unterste Trittstufe 54 einem auf dem Aufstandsuntergrund U aufliegenden oder von diesem abstehenden Kollisionshindernis in gewissen Grenzen passiv ausweichen kann. Die elastomeren Seitenwangen 50b und 52b sind verglichen mit den starren Seitenholmen 50a und 52a durch verhältnismäßig geringe Kräfte verformbar.

Die unmittelbar über der untersten Trittstufe 54 gelegene Trittstufe 56 ist relativ zur untersten Trittstufe 54 längs der Seitenholme 50a und 52a an den Seitenholmen 50a und 52a beweglich gelagert.

Über der zweituntersten Trittstufe 56 ist eine nächstobere Trittstufe 58 sowohl relativ zur untersten Trittstufe 54 als auch relativ zur zweituntersten Trittstufe 56 längs der Seitenholme 50a und 52a an den Seitenholmen 50a und 52a beweglich gelagert.

Eine oberste Trittstufe 60 der Steigeinrichtung 48 ist maschinenrahmenfest am Maschinenrahmen 14 angeordnet. Da die Seitenteile 50 und 52, also die Seitenholme 50a und 52a mit den daran befestigten elastomeren Seitenwangen 50b und 52b, relativ zum Maschinenrahmen 14 translatorisch verlagerbar am Maschinenrahmen 14 gelagert sind, sind alle relativ zum Maschinenrahmen 14 beweglichen Trittstufen 54, 56 58 relativ zur maschinenrahmenfesten Trittstufe 60 verlagerbar.

Die relativ zum Maschinenrahmen 14 beweglichen Trittstufen 54, 56 und 58 bilden gemeinsam mit den sie tragenden Seitenteilen 50 und 52 eine relativ zum Maschinenrahmen 14 bewegliche Trittstufenbaugruppe 59.

Beiderseits der maschinenrahmenfesten Trittstufe 60 befindet sich je ein maschinenrahmenfester Lagerkasten 62 bzw. 64, in welchen die Seitenteile 50 bzw. 52 über geeignete Lagermittel, wie beispielsweise Gleit- oder/und Wälzlager, zur translatorischen Relativbewegung relativ zum Maschinenrahmen 14 gelagert sind. Wegen der geringeren Reibung ist die Verwendung von Wälzlagern bevorzugt.

Am unteren Längsende der Seitenholme 50a und 52a sind die Seitenholme 50a und 52a durch einen C- förmigen Verbindungsbügel 66 miteinander starr verbunden. Der Verbindungsbügel 66 ist beispielsweise aus Stahlblech gefertigt und mit den Seitenholmen 50a und 52a verschraubt oder bevorzugt verschweißt.

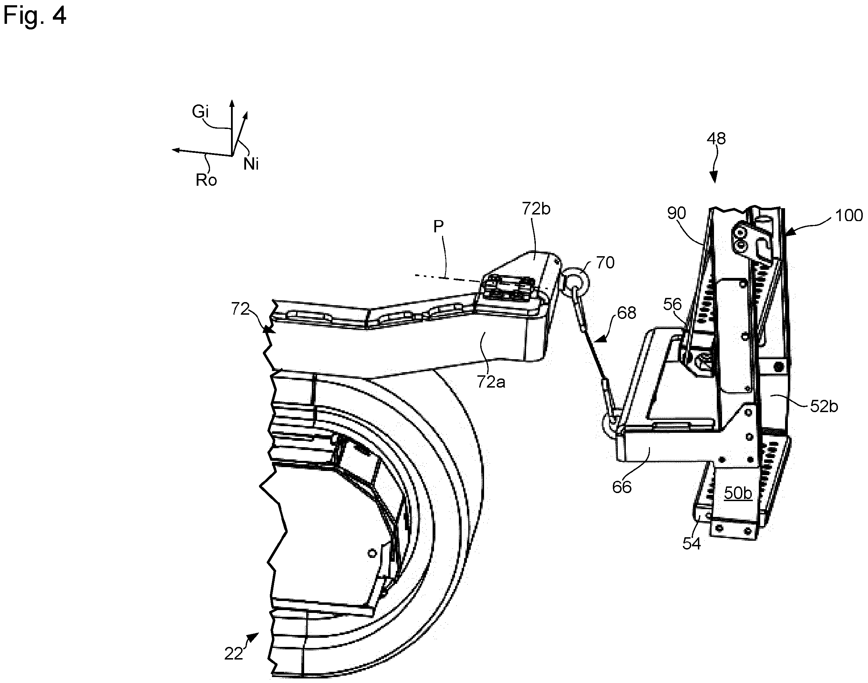

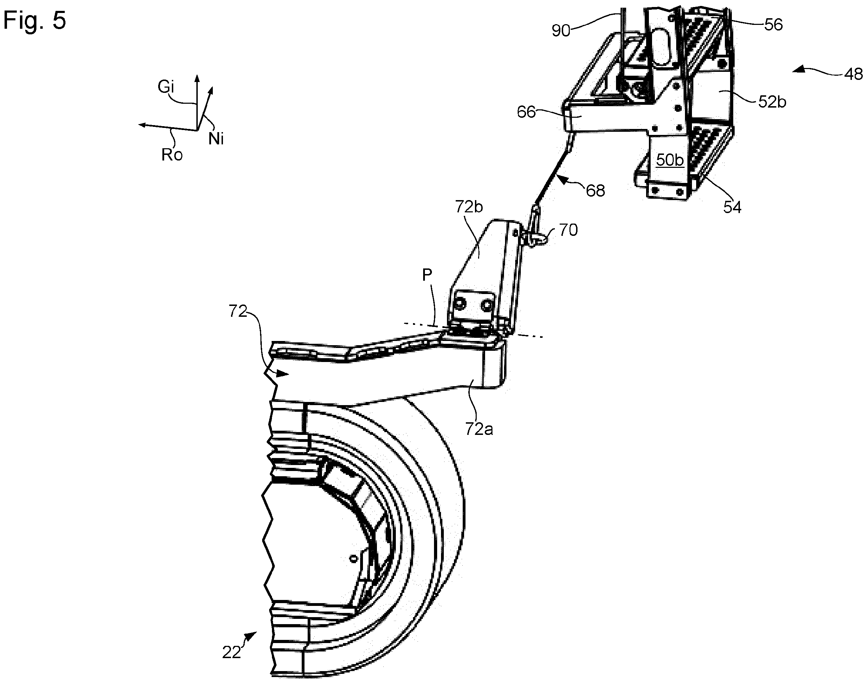

Wie im Zusammenhang mit den Figuren 4 und 5 noch deutlicher beschrieben werden wird, ist der Verbindungsbügel 66 über ein formlabiles Zugmittel 68, wie beispielsweise eine Kette oder ein Seil, mit einer Kopplungsformation 70 in Gestalt einer Öse eines laufwerkseitigen Kopplungsbauteils 72 verbunden.

Die relativ zum Maschinenrahmen 14 bewegliche Trittstufenbaugruppe 59 der Steigeinrichtung 48 ist im Wesentlichen nur durch seine Gewichtskraft belastet und wird durch das Zugmittel 68 an Ort und Stelle gehalten. Die Gewichtskraft des beweglichen Teils der Steigeinrichtung 48 spannt also das Zugmittel 68.

Der laufwerksfeste Teil 72a des laufwerksseitigen Kopplungsbauteils 72 ist fest mit einer gabelartig das linke hintere Laufwerk 22 umgreifenden Laufwerkskonsole 74 verbunden, etwa durch Verschweißen. Die Laufwerkskonsole 74 verbindet die Hubsäule 16 mit dem linken hinteren Laufwerk 22 derart, dass das Laufwerk 22 relativ zur Hubsäule 16 um eine in Figur 1 parallel zur Nickachse Ni verlaufende Kippachse K kippbar ist. Ein die Kopplungsformation 70 tragende Teil 72b (siehe Figuren 4 und 5) ist in Figur 1 um eine zur Rollachse Ro parallele Klappachse P relativ zu dem laufwerksfeste Teil 72a des laufwerksseitigen Kopplungsbauteils 72 schwenkbar.

Über Handgriffe 50c bzw. 52c am oberen Längsende der Seitenholme 50a bzw. 52a sind die Seitenteile 50 und 52 mit den sie verbindenden Trittstufen 54, 56 und 58 manuell vom Bedienstand 28 aus anhebbar und absenkbar.

Durch die Bewegungsführung der Seitenteile 50 und 52 in den Lagerkästen 62 und 64 und weiter durch die Verbindung der Seitenteile 50 und 52 und damit der untersten Trittstufe 54 mit der Kopplungsformation 70 und folglich mit dem laufwerksseitigen Kopplungsbauteil 72 erfolgt eine Veränderung der relativen Höhenlage der Seitenteile 50 und 52 relativ zum Maschinenrahmen 14 durch die Hubvorrichtung 17, vor allen Dingen durch die beiden hinteren Hubsäulen 18, sodass die Hubvorrichtung 17 einen Verstellaktuator 76 der Steigeinrichtung 48 bildet.

Handläufe 78 und 80 beiderseits der Steigeinrichtung 48 gestatten einer auf- und absteigenden Person einen Handangriff und damit einen sicheren Halt während einer Steigbewegung auf der Steigeinrichtung 48.

Die in Figur 1 gezeigte Betriebssituation der Kleinfräse 12 ist eine zum Aufstandsuntergrund U hin maximal abgesenkte Stellung des Maschinenrahmens 14. Die zwischen den Trittstufen 54, 56, 58 und 60 herrschenden einzelnen Abstände sind jeweils betragsmäßig etwa gleich groß und sind in der in Figur 1 gezeigten Betriebssituation minimal.

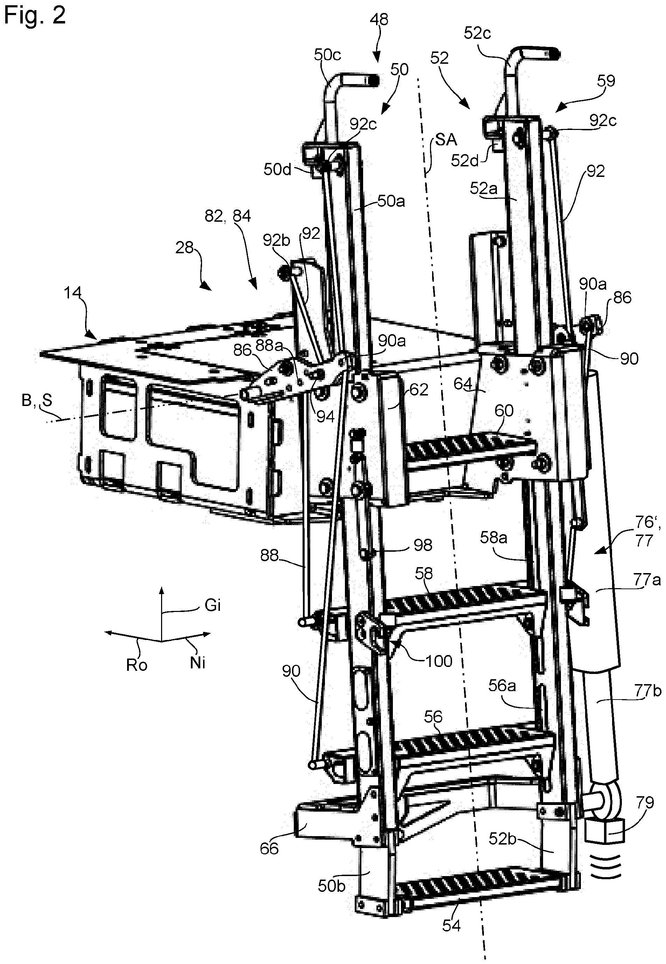

Figur 2 zeigt den Aufstiegsbereich der Kleinfräse 12 in Alleinstellung, d. h. ohne umgebende übrige Bodenbearbeitungsmaschine 10. Ein Abschnitt des Maschinenrahmens 14 repräsentiert das Höhenniveau, auf welchem sich der Bedienstand 28 befindet.

Zusätzlich zu den bereits in Figur 1 beschrifteten Bauteilen und Bauteilanordnungen ist in der übersichtlicheren Figur 2 die Steigachse SA eingezeichnet, längs welcher die Trittstufen 54, 56, 58 und 60 vom Aufstandsuntergrund U weg aufeinander folgen und längs welcher die Trittstufen 54, 56 und 58 bzw. die Trittstufenbaugruppe 59 relativ zum Maschinenrahmen 14 beweglich angeordnet sind. Die Steigachse SA verläuft parallel zu den ebenfalls parallelen virtuellen Längsachsen der Seitenholme 50 und 52.

Man erkennt am Seitenholm 52 ein Langloch 58a, in welchem die Trittstufe 58 längs der Steigachse SA relativ zu den übrigen Trittstufen 54, 56 und 60 beweglich am Seitenholm 52 geführt ist. Analog dazu ist die darunter liegende Trittstufe 56 in einem kollinearen Langloch 56a längs der Steigachse SA relativ zu jeder der übrigen Trittstufen 54, 58 und 60 beweglich am Seitenholm 52 geführt. Der Seitenholm 50 weist auf der vom Betrachter der Figur 2 abgewandten Seite korrespondierende Langlöcher auf in denen die Trittstufen 58 bzw. 56 mit ihrem dem Seitenholm 50 nähergelegenen Längsende beweglich geführt sind.

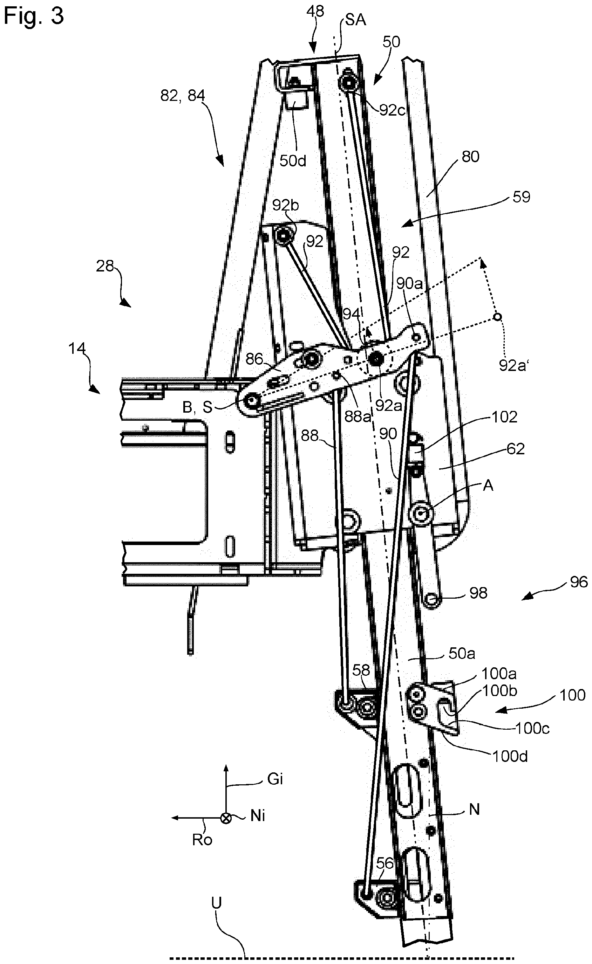

Anhand der Figuren 2 und 3 wird nachfolgend ein Bewegungssynchronisierungsmechanismus 82 erläutert werden, welcher eine durch die Hubvorrichtung 17 angetriebene Relativbewegung des Maschinenrahmens 14 relativ zum Fahrwerk 18, insbesondere relativ zu dem mit dem Verbindungsbügel 66 und damit der untersten Trittstufe 54 gekoppelten linken hinteren Fahrwerk 22, in eine Bewegung der Trittstufen 54, 56, 58 und 60 relativ zueinander derart übertragt, dass die längs der Steigachse SA unmittelbar aufeinander folgenden Abstände zwischen allen längs der Steigachse SA unmittelbar benachbarten Trittstufen im Wesentlichen über den gesamten Hubbewegungsbereich des Maschinenrahmens 14 betragsmäßig gleich groß sind.

Der Bewegungssynchronisierungsmechanismus 82 umfasst eine Übertragungsanordnung 84 in Gestalt eines Schwenkhebels 86. Dieser Schwenkhebel 86 ist um eine Schwenkachse S als einer Bewegungsachse B relativ zum Maschinenrahmen 14 schwenkbeweglich.

An dem Schwenkhebel 86 ist an einem der Schwenkachse S nächstgelegenen Anlenkpunkt 88a mit einem Seil 88 die Trittstufe 58 angelenkt. An einem Anlenkpunkt 90a ist ein Seil 90 am Schwenkhebel 86 angelenkt, welches die Trittstufe 56 mit dem Schwenkhebel 86 koppelt. Der Abstand des Anlenkpunktes 90a vom Anlenkpunkt 88a ist dabei gleich dem Abstand des Anlenkpunktes 88a von der Schwenkachse S.

Vorliegend ist die unterste Trittstufe 54 über das Zugmittel 68 unmittelbar mit der Hubvorrichtung 17 als dem Verstellaktuator 76 der Steigeinrichtung 48 verbunden. Die unterste Trittstufe 54 ist daher die Leit-Trittstufe, von deren Relativbewegung relativ zum Maschinenrahmen 14 die Bewegung der übrigen relativ zum Maschinenrahmen 14 beweglichen Trittstufen 56 und 58 durch die Übertragungsanordnung 84 abgeleitet wird. Die Leit-Trittstufe 54 ist über ein Seil 92 mit dem Schwenkhebel 86 gekoppelt, wobei das Seil 92 - anders als die Seile 88 und 90 - nicht fest mit dem Schwenkhebel 86 gekoppelt ist, sondern über eine Umlenkrolle 94. Der Anlenkpunkt 92a der Umlenkrolle 94 am Schwenkhebel 86 bestimmt den Hebelarm der Leit-Trittstufe 54. Ein Seilende 92b des Seils 92 ist maschinenrahmenfest, das entgegengesetzte Seilende 92c ist fest mit dem Seitenteil 50 und damit mit der Leit-Trittstufe 54 verbunden. Wegen der Umlenkung des Seils 92 an der Umlenkrolle 94 wird eine Verlagerung der Leit-Trittstufe 54 längs der Steigachse SA nur mit dem halbierten Verlagerungsbetrag auf den Schwenkhebel 86 übertragen. Die daraus resultierende Schwenkbewegung des Schwenkhebels 86 entspricht derselben Schwenkbewegung, die bei gleicher Verlagerung der Leit-Trittstufe 54 ein ohne Umlenkrolle unmittelbar mit dem Schwenkhebel 86 am alternativen Anlenkpunkt 92a' angelenktes Seil 92 bewirken würde. Der alternative Anlenkpunkt 92a' hat vom vorhergehenden Anlenkpunkt 90a den gleichen Abstand wie der Anlenkpunkt 90a vom vorhergehenden Anlenkpunkt 88a.

Die Verwendung der Umlenkrolle 94 gestattet also eine Verkürzung des Schwenkhebels 86 bei gleicher Bewegungsübertragung. Effektiv ist unter gleichen Anlenk-Bedingungen der Anlenkpunkt der Leit-Trittstufe 54 am weitesten von der Schwenkachse S entfernt. Mit zunehmendem Abstand einer Trittstufe von der Leit-Trittstufe 54 nähert sich der Anlenkpunkt der Trittstufe am Schwenkhebel 86 dessen Schwenkachse S an. Dadurch wird die Relativbewegung der unmittelbar mit dem Verstellaktuator 76 gekoppelten Leit-Trittstufe 54 relativ zum Maschinenrahmen 14 durch den Schwenkhebel 86 um ein durch den Abstand der Anlenkpunkte von der Schwenkachse S bestimmtes Übertragungsverhältnis verringert auf die übrigen relativ zum Maschinenrahmen 14 beweglichen Trittstufen 56 und 58 übertragen, und zwar umso stärker verringert, je weiter die Trittstufe von der Leit-Trittstufe 54 entfernt angeordnet ist.

Da die Hubvorrichtung 17 als der Verstellaktuator 76 stufenlos den Höhenabstand zwischen Maschinenrahmen 14 und Fahrwerk 16 verändern kann, ist auch der Abstand der obersten maschinenrahmenfesten Trittstufe 60 von der untersten Leit-Trittstufe 54 stufenlos veränderbar. Jede Trittstufe 56, 58 und 60 ist dabei in jeder Betriebssituation der Hubvorrichtung 17 mit betragsmäßig gleichem Abstand von der ihr zum Aufstandsuntergrund U hin nächst gelegenen benachbarten Trittstufe angeordnet.

Als alternativer Verstellaktuator 76' ist in Figur 2 eine gesondert von der Hubvorrichtung 17 ausgebildete hydraulisch betätigbare Kolben-Zylinder-Anordnung 77 dargestellt. Dieser Verstellaktuator 76' kann die Steigeinrichtung 48 bzw. die relativ zum Maschinenrahmen 14 bewegliche Trittstufenbaugruppe 59 längs der Steigachse SA verstellen, wenn die Hubvorrichtung 17 nicht als Verstellaktuator 76 genutzt wird.

An dem dem Aufstandsuntergrund U zugewandten Längsende der aus einem maschinenrahmenfest angeordneten Zylinder 77a ausschiebbaren und in den Zylinder 77a einziehbaren Kolbenstange 77b ist ein Abstandssensor 79 angeordnet, welcher den Abstand zwischen sich und dem Aufstandsuntergrund U erfasst und eine den Verstellaktuator 76' steuernde Steuervorrichtung 36 überträgt. Die Kolbenstange 77b ist bezüglich der Höhenkoordinate in Gierachsenrichtung ortsfest mit dem Verbindungsbügel 66 und damit mit den Seitenteilen 50 und 52 und folglich mit der untersten Trittstufe 54 gekoppelt. Die vom Abstandssensor 79 gelieferte Abstandsinformation ist daher eine Abstandsinformation über den Höhenabstand der Trittstufe 54 vom Aufstandsuntergrund U. Die Steuereinrichtung 36 ist durch Programmierung dazu ausgebildet, den Verstellaktuator 76' nach Maßgabe der Signale des Abstandssensors 79 derart zu steuern, dass die unterste Stufe 54 einen vorbestimmten Abstand von dem vom Abstandssensor erfassten Bereich des Aufstandsuntergrund hat oder in einem vorbestimmten Abstandsbereich von dem erfassten Bereich gelegen ist. Der Abstandssensor im dargestellten Ausführungsbeispiel erfasst den Aufstandsuntergrund U bevorzugt in einem Bereich, in welchem die virtuelle Steigachse SA diesen durchstößt. An diesem Ort würde eine Person unmittelbar vor oder nach Benutzung der Steigachse sich befinden.

Der Abstandssensor 79 ist nur beispielhaft an der Kolbenstange 77a angeordnet dargestellt. Abweichend davon kann der Sensor 79 beispielsweise an einem der beiden Seitenholme 50a oder 50b, am Verbindungsbügel 66 oder an der untersten Trittstufe 54 angeordnet sein.

In Figur 3 ist der Aufstandsuntergrund U in seiner Orientierung relativ zur Steigachse angedeutet. Der Aufstandsuntergrund verläuft orthogonal zur Zeichenebene von Figur 3, jedoch tatsächlich weiter von der Trittstufe 56 entfernt als in Figur 3 dargestellt. Zu erkennen ist, dass die Steigachse SA aus Gründen verbesserter Ergonomie bevorzugt um etwa 6° gegenüber einer Normalen N auf den Aufstandsuntergrund U geneigt ist, und zwar wegen der Anordnung der Steigeinrichtung 48 am Heck der Kleinfräse 12 längs der Rollachse Ro in Vorwärtsfahrtrichtung. Die Neigung ist derart, dass sich die Trittstufen in Richtung vom Aufstandsuntergrund U weg dem Maschinenrahmen annähern. Die zueinander parallelen Trittstufen 54, 56, 58 und 60 erstrecken sich orthogonal zur Rollachse Ro.

Anstelle der genannten Seile können an der Übertragungsanordnung 84 auch andere Zugmittel verwendet werden, etwa Ketten oder Bänder. Anstelle der nicht umgelenkten Seile 88 und 90 können auch Stangen zur Übertragung der Bewegung zwischen Schwenkhebel 86 und den Trittstufen 56 bzw. 88 verwendet werden. Wird der alternative Anlenkort 92a' zur Verbindung des Schwenkhebels 86 mit der Leit-Trittstufe 54 verwendet, kann auch diese Verbindung alternativ durch eine Stange realisiert sein.

In Figur 3 weiter zu erkennen ist ein Arretiermechanismus 96, mit welchem die Steigeinrichtung 48, insbesondere die Trittstufenbaugruppe 59, in einer angehobenen Betriebsstellung arretiert werden kann, in welcher die Trittstufe 54 und folglich auch die Trittstufen 56 und 58 möglichst stark dem Maschinenrahmen 14 angenähert sind. Dies ermöglicht während einer Bodenbearbeitung eine möglichst nahe Annäherung des Hecks der Kleinfräse 12 an ein Hindernis, ohne dass eine Beschädigung der Steigeinrichtung 48 zu befürchten ist.

Der Arretiermechanismus 96 umfasst einen um eine zur Nickachse Ni parallele Auslenkachse A in entgegengesetzte Auslenkrichtungen auslenkbaren Nocken 98 und eine mit dem Nocken 98 zusammenwirkende Steuerkurve 100. Die Auslenkachse A ist maschinenrahmenfest. Die Steuerkurve 100 ist am Seitenteil 50, insbesondere am Seitenholm 50a zur gemeinsamen Bewegung mit diesem befestigt.

Bei Annäherung der Steuerkurve 100 längs der Steigachse SA an den Nocken 98 trifft der Nocken 98 auf eine relativ zur Steigachse SA geneigte Stirnseite 100a der Steuerkurve 100, sodass die Stirnseite 100a den Nocken 98 aufgrund ihrer Neigung zu einer Rastkontur 100b hin ausgelenkt. Der Nocken 98 ist durch eine Feder 102 in die in Figur 1 gezeigte Stellung vorgespannt, in welche er durch die Federvorspannung ohne äußere Einwirkung nach einer Auslenkung wieder zurückkehrt.

Bei fortgesetzter Annäherung der Steuerkurve 100 an den Bedienstand 28 fährt der Nocken 98 den in Figur 3 rechten Teil der Steuerkurve 100 mit der Rastkontur 100b ab und gerät schließlich aufgrund seiner Federvorspannung in Formschlusseingriff mit der Rastkontur 100b.

Durch weitere Annäherung der Steuerkurve 100 an den Bedienstand 28 kann dieser Formschlusseingriff zwischen Nocken 98 und Rastkontur 100b wieder gelöst werden, denn aufgrund der weiteren Annäherung trifft der Nocken 98 auf einen Löseabschnitt 100c der Steuerkurve 100, welcher im gleichen Sinne wie die Stirnseite 100a der Steuerkurve 100 relativ zur Steigachse SA geneigt ist. Daher wird der Nocken 98 unter fortgesetzter Annäherung der Steuerkurve 100 an den Bedienstand 28 durch den Löseabschnitt 100c gegen seine Federvorspannung aus der Rastkontur 100b herausbewegt und hintergreift schließlich die gesamte Steuerkurve 100. Eine weitere Annäherung der Steuerkurve 100 an den Bedienstand 28 würde dann zum Abheben der Steuerkurve 100 vom Nocken 98 führen.

Wird in dieser Situation die Bewegung der Steuerkurve 100 und damit der Steigeinrichtung 48 umgekehrt, also die Steuerkurve 100 in Richtung zum Nocken 98 hin abgesenkt, gelangt der Nocken 98 in Berührkontakt mit einem wiederum relativ zur Steigachse SA geneigten Rückstellabschnitt 100d, welcher bei fortgesetzter Absenkbewegung der Steuerkurve 100 den Nocken 98 dieses Mal auf die in Figur 3 linke Seite der Steuerkurve 100 ausgelenkt, wo er ohne Formschlusseingriff mit der Rastkontur 100b zurück in die in Figur 3 gezeigte Stellung gelangen kann.

Die Steigeinrichtung 48 ist bevorzugt bezüglich einer die Steigachse SA enthaltenden und parallel zur Rollachse Ro verlaufenden Symmetrieebene spiegelbildlich ausgebildet. Die oben am Seitenteil 50 beschriebenen Bauteile und Bauteilanordnungen einschließlich der Übertragungsanordnung 84 sind unter Beachtung der genannten Symmetriebedingung bevorzugt auch am Seitenteil 52 vorhanden.

An den Seitenteilen 50 und 52 in Figur 2 erkennbare Endanschläge 50d bzw. 52d, welche durch Gummipuffer gebildet sein können, definieren eine Endlage der Seitenteile 50 und 52 und somit der Steigeinrichtung 48 relativ zum Maschinenrahmen 14.

Dann, wenn der Maschinenrahmen 14 bei einer Hubbewegung die Endanschläge 50d bzw. 52d erreicht, endet eine Relativbewegung zwischen Maschinenrahmen 14 und Steigeinrichtung 48, sodass die dann mit den Endanschlägen 50d und 52d auf dem Maschinenrahmen 14 aufliegende Steigeinrichtung 48 bzw. Trittstufenbaugruppe 59 gemeinsam mit dem Maschinenrahmen 14 weiter angehoben wird. Hierdurch kann ein zu großer Abstand der Trittstufen 54, 56, 58 und 60 voneinander vermieden werden, jedoch zum Preis eines erhöhten Abstands der untersten Trittstufe 54 vom Aufstandsuntergrund U.

Um die Mitnahme der Seitenteile 50 und 52 und damit der Trittstufen 54, 56 und 58 durch den Maschinenrahmen 14 zu ermöglichen und um die oben beschriebene manuelle Arretierung der Steigeinrichtung 48 am Maschinenrahmen 14 nach einem Anheben der Seitenteile 50 und 52 vom Bedienstand 28 aus zu ermöglichen, ist der Verbindungsbügel 66 durch das Zugmittel 68 mit Bewegungsspiel mit der Kopplungsformation 70 gekoppelt.

Figur 4 zeigt eine Betriebsstellung der Steigeinrichtung 48, welche stellvertretend für jede Betriebsstellung steht, bei welcher die Endanschläge 50d und 52d nicht am Maschinenrahmen 14 anliegen und in welcher folglich eine Bewegung des Maschinenrahmens 14 relativ zur Steigeinrichtung 48, insbesondere relativ zu den Seitenteilen 50 und 52 möglich ist. Der relativ zum Maschinenrahmen 14 bewegliche Teil der Steigeinrichtung 48, also die Trittstufenbaugruppe 59, ruht mit seiner Gewichtskraft vermittels des Zugmittels 68 an der Kopplungsformation 70, wodurch das Zugmittel 68 gespannt ist. Das Zugmittel 68 muss daher derart ausgelegt sein, dass es die Gewichtskraft der Steigeinrichtung 48 und zusätzlich das maximale Gewicht einer die Steigeinrichtung 48 benutzenden Person trägt.

Durch die Verwendung eines nur auf Zug belastbaren Zugmittels 68, wie etwa Kette, Seil oder Band, besteht trotz der Kopplung der Steigeinrichtung 48 mit dem laufwerksseitigen Kopplungsbauteil 72 ein Bewegungsspiel der Steigeinrichtung 48 längs der Steigachse SA. Dieses Bewegungsspiel kann noch dadurch erhöht sein, dass das die Kopplungsformation 70 tragende Teil 72b um die Klappachse P relativ zum laufwerksfesten Teil 72a des laufwerksseitigen Kopplungsbauteil 72 vom Aufstandsuntergrund U weg klappbar ist. Figur 5 zeigt eine maximal angehobene Betriebsstellung der Steigeinrichtung 48 bzw. der Trittstufenbaugruppe 59 relativ zum hinteren Laufwerk 22.

Durch die Klappbarkeit der Kopplungsformation 70 kann der Bewegungsweg der Steigeinrichtung 48 längs der Steigachse SA trotz Kopplung mit dem laufwerksseitigen Kopplungsbauteil 72 erhöht werden. Somit kann die Steigeinrichtung 48 selbst dann, wenn die Endanschläge 50d und 52d am Maschinenrahmen 14 anliegen und eine Hubbewegung des Maschinenrahmens 14 nur noch gemeinsam mit der Steigeinrichtung 48 erfolgen kann, die Steigeinrichtung 48 weiter vom Aufstandsuntergrund U entfernt werden, als wenn die Klappbarkeit der Kupplungsformation 70 nicht gegeben wäre. Insgesamt wird so ein vergrößerter Verstellbereich der Steigeinrichtung 48 relativ zum Aufstandsuntergrund U erreicht.

## Patentansprüche

1. Selbstfahrende Bodenbearbeitungsmaschine (10) mit
- einem Maschinenrahmen (14),
- einem den Maschinenrahmen (14) tragenden Fahrwerk (16), wobei das Fahrwerk (16) wenigstens zwei auf einem Aufstandsuntergrund (U) der Bodenbearbeitungsmaschine (10) abrollbare Laufwerke (20, 22) umfasst,
- eine Arbeitsvorrichtung (30), welche zur Bearbeitung eines Bodens ausgebildet ist,
- eine Antriebskraftmaschine (46) zur Bereitstellung von Antriebskraft für die Bodenbearbeitungsmaschine (10),
- einen auf einem Höhenniveau über dem Aufstandsuntergrund (U) an dem Maschinenrahmen (14) angeordneten Bedienstand (28) zur Bedienung der Bodenbearbeitungsmaschine (10), und
- eine zwischen dem Aufstandsuntergrund (U) und dem Bedienstand (28) angeordnete Steigeinrichtung (48), welche eine Mehrzahl Trittstufen (54, 56, 58, 60) aufweist, die längs einer zwischen Aufstandsuntergrund (U) und dem Höhenniveau des Bedienstands (28) verlaufenden und mit dem Aufstandsuntergrund (U) einen Winkel einschließenden virtuellen Steigachse (SA) aufeinander folgend angeordnet sind,
wobei die Steigeinrichtung (48) längs der Steigachse (SA) längenveränderlich ist und hierzu wenigstens eine der Trittstufen (54, 56, 58, 60) relativ zu wenigstens einer anderen der Trittstufen (54, 56, 58, 60) mittels eines Verstellaktuators (76; 76') verstellbar ist,
**dadurch gekennzeichnet, dass** die Steigeinrichtung (48) in wenigstens drei für eine Steigbewegung eines Maschinenführers zwischen Bedienstand (28) und Aufstandsuntergrund (U) unterschiedliche steigbereite Betriebsstellungen verstellbar ist, wobei für jedes aus zwei von wenigstens drei längs der Steigachse (SA) hintereinander angeordneten Trittstufen (54, 56, 58, 60) gebildete Trittstufenpaar (54/56, 56/58, 58/60) gilt, dass der Abstand zwischen den Trittstufen (54, 56, 58, 60) des jeweiligen Trittstufenpaars (54/56, 56/58, 58/60) in unterschiedlichen Betriebsstellungen betragsmäßig unterschiedlich groß ist.

2. Selbstfahrende Bodenbearbeitungsmaschine (10) nach Anspruch 1,
**dadurch gekennzeichnet, dass** die Steigeinrichtung innerhalb ihres Verstellbereichs stufenlos in eine Vielzahl von für eine Steigbewegung des Maschinenführers zwischen Bedienstand und Aufstandsuntergrund unterschiedlichen steigbereiten Betriebsstellungen verstellbar ist.

3. Selbstfahrende Bodenbearbeitungsmaschine (10) nach Anspruch 1 oder 2,
**dadurch gekennzeichnet, dass** die Bodenbearbeitungsmaschine (10) eine Hubvorrichtung (17) umfasst, mittels welcher der Maschinenrahmen (14) höhenveränderlich mit dem Fahrwerk (16) verbunden ist, wobei die Hubvorrichtung (17) dazu ausgebildet ist, den Abstand des Maschinenrahmens (14) relativ zum Fahrwerk (16) zu verändern.

4. Selbstfahrende Bodenbearbeitungsmaschine (10) nach einem der vorhergehenden Ansprüche ,
**dadurch gekennzeichnet, dass** der Verstellaktuator (76; 76') dazu ausgebildet ist, nach Maßgabe einer aufstandsuntergrund-bezogenen Referenz automatisiert derart betrieben zu werden, dass eine vorbestimmte relativ zum Maschinenrahmen (14) bewegliche Trittstufe (54, 56, 58) relativ zum Maschinenrahmen (14) oder/und relativ zum Aufstandsuntergrund (U) in einem vorbestimmten räumlichen Bereich angeordnet ist.

5. Selbstfahrende Bodenbearbeitungsmaschine (10) nach einem der vorhergehenden Ansprüche,
**dadurch gekennzeichnet, dass** eine weiter vom Aufstandsuntergrund (U) entfernt gelegene obere (60) der wenigstens drei Trittstufen (54, 56, 58, 60) ortsfest am Maschinenrahmen (14) angeordnet ist.

6. Selbstfahrende Bodenbearbeitungsmaschine (10) nach einem der vorhergehenden Ansprüche,
**dadurch gekennzeichnet, dass** eine näher beim Aufstandsuntergrund (U) gelegene untere (54) der wenigstens drei Trittstufen (54, 56, 58, 60) mittels eines Verbindungsmittels (68) mit einem laufwerksseitigen Kopplungsbauteil (72) gekoppelt ist, wobei das laufwerksseitige Kopplungsbauteil (72) einen Abschnitt eines Laufwerks (22) oder ein zur gemeinsamen Höhenverlagerung mit dem Laufwerk (22) verbundenes Bauteil (74) umfasst, wobei bevorzugt die untere Trittstufe (54) mit einem Bewegungsspiel mit einem Bewegungsfreiheitsgrad längs der Steigachse (SA) mit dem laufwerksseitigen Kopplungsbauteil (72) gekoppelt ist, insbesondere mittels eines nur Zugkraft übertragenden Zugmittels (68), wie Kette, Seil oder Band, als das Verbindungsmittel (68) mit dem laufwerksseitigen Kopplungsbauteil (72) gekoppelt ist.

7. Selbstfahrende Bodenbearbeitungsmaschine (10) nach Anspruch 6,
**dadurch gekennzeichnet, dass** das laufwerksseitige Kopplungsbauteil (72) eine Kopplungsformation (70) aufweist, mit welcher das Verbindungsmittel (68) verbunden ist, wobei die Kopplungsformation (70) relativ zum Laufwerk (22) mit einer Bewegungskomponente längs der Steigachse (SA) beweglich ist.

8. Selbstfahrende Bodenbearbeitungsmaschine (10) nach einem der Ansprüche 4 bis 7, unter Einbeziehung des Anspruchs 3,
**dadurch gekennzeichnet, dass** die Hubvorrichtung (17) der Verstellaktuator (76) der Steigeinrichtung (48) ist.

9. Selbstfahrende Bodenbearbeitungsmaschine (10) nach einem der vorhergehenden Ansprüche,
**dadurch gekennzeichnet, dass** eine weiter vom Aufstandsuntergrund (U) entfernt gelegene obere (58) der wenigstens drei Trittstufen (54, 56, 58, 60) und eine näher beim Aufstandsuntergrund (U) gelegene untere (56) der wenigstens drei Trittstufen (54, 56, 58, 60) über einen Bewegungssynchronisierungsmechanismus (82) kinematisch derart miteinander gekoppelt sind, dass sich die Abstände zwischen je zwei längs der Steigachse (SA) aufeinander folgenden Trittstufen (54/56, 56/58, 58/60) der wenigstens drei Trittstufen (54, 56, 58, 60) in einer Mehrzahl unterschiedlicher Betriebszustände, bezogen auf den größten Abstand, betragsmäßig um nicht mehr als 10 %, vorzugsweise um nicht mehr als 5 %, besonders bevorzugt nicht unterscheiden.

10. Selbstfahrende Bodenbearbeitungsmaschine (10) nach Anspruch 9,
**dadurch gekennzeichnet, dass** der Bewegungssynchronisierungsmechanismus (82) eine um eine zur Steigachse (SA) orthogonale Bewegungsachse (B) bewegbare Übertragungsanordnung (84) umfasst, wobei wenigstens ein Teil der relativ zum Maschinenrahmen (14) längs der Steigachse (SA) beweglichen Trittstufen (54, 56, 58) jeweils mit der Übertragungsanordnung (84) derart bewegungsübertragend verbunden ist, dass eine Bewegung der Übertragungsanordnung (84) mit einer Verstellbewegung der jeweiligen Trittstufe (54, 56, 58) längs der Steigachse (SA) korreliert, wobei die Bewegung des Verstellaktuators (76) auf die Übertragungsanordnung (84) und von dort mit einem jeweils anderen Übertragungsverhältnis auf jede aus einer Mehrzahl der relativ zum Maschinenrahmen (14) längs der Steigachse (SA) beweglichen, mit der Übertragungsanordnung (84) gekoppelten Trittstufen (54, 56, 58) übertragbar ist.

11. Selbstfahrende Bodenbearbeitungsmaschine (10) nach Anspruch 10,
**dadurch gekennzeichnet, dass** die Übertragungsanordnung (84) einen um eine Schwenkachse (S) als der Bewegungsachse (B) schwenkbaren Schwenkhebel (86) umfasst oder ein solcher Schwenkhebel (86) ist, wobei wenigstens ein Teil der relativ zum Maschinenrahmen (14) beweglichen Trittstufen (54, 56, 58) am Schwenkhebel (86) angelenkt ist, wobei das Übertragungsverhältnis durch den Abstand zwischen einem Anlenkort (88a, 90a, 92a) einer Trittstufe (54, 56, 58) am Schwenkhebel (86) und der Schwenkachse (S) des Schwenkhebels (86) und somit durch den dieser Trittstufe (54, 56, 58) zugeordneten Hebelarm bestimmt ist,
oder/und
dass die Übertragungsanordnung (84) eine um eine Rotationsachse als der Bewegungsachse (B) drehbare Rotationsbaugruppe umfasst oder ist, wobei die Rotationsbaugruppe eine Mehrzahl von gemeinsam drehenden Rotationskörpern unterschiedlichen Durchmessers umfasst, wobei jede Trittstufe (54, 56, 58) aus wenigstens einem Teil der relativ zum Maschinenrahmen (14) beweglichen Trittstufen (54, 56, 58) mit einem jeweiligen Eingriffsumfang eines anderen Rotationskörpers zur gemeinsamen Bewegung gekoppelt ist, wobei das Übertragungsverhältnis durch die Durchmesserabmessung eines Eingriffsumfangs eines Rotationskörpers bestimmt ist.

12. Selbstfahrende Bodenbearbeitungsmaschine (10) nach einem der Ansprüche 3 bis 7 und 9 bis 11, unter Einbeziehung des Anspruchs 3,
**dadurch gekennzeichnet, dass** der Verstellaktuator (76; 76') ein gesondert von der Hubvorrichtung (17) ausgebildeter Verstellaktuator (76') ist.

13. Selbstfahrende Bodenbearbeitungsmaschine (10) nach Anspruch 12 unter Einbeziehung des Anspruchs 4,
**dadurch gekennzeichnet, dass** eine den Betrieb des Verstellaktuators (76') steuernde Steuervorrichtung dazu ausgebildet ist, den Verstellaktuator (76') nach Maßgabe einer Arbeitszustands- oder/und Arbeitsstellungsinformation der Hubvorrichtung (17) zu betreiben.

14. Selbstfahrende Bodenbearbeitungsmaschine (10) nach Anspruch 12 oder 13 unter Einbeziehung des Anspruchs 9,
**dadurch gekennzeichnet, dass** der Verstellaktuator (76; 76') eine längs einer Aktuatorachse ausfahrbare und einziehbare mehrteilige Teleskop-Aktuatorstange mit synchron ausfahrbaren und einziehbaren Teleskop-Aktuatorteilstangen aufweist.

15. Selbstfahrende Bodenbearbeitungsmaschine (10) nach einem der vorhergehenden Ansprüche,
**dadurch gekennzeichnet, dass** die Steigeinrichtung (48) in wenigstens einer vorbestimmten Stellung arretierbar ist.

## Claims

1. A self-propelled earth working machine (10) comprising
- a machine frame (14),
- a traveling gear (16) supporting the machine frame (14), the traveling gear (16) comprising at least two drive units (20, 22) rollable on a contact subsurface (U) of the earth working machine (10),
- a working apparatus (30), which is designed for working a subsoil,
- a driving force machine (46) for providing driving force for the earth working machine (10),
- an operator platform (28) situated on the machine frame (14) at an elevation level above the contact subsurface (U) for operating the earth working machine (10), and
- a climbing device (48) situated between the contact subsurface (U) and the operator platform (28), which has a plurality of step treads (54, 56, 58, 60), which are situated in succession along a virtual climbing axis (SA) extending between the contact subsurface (U) and the elevation level of the operator platform (28) and enclosing an angle together with the contact subsurface (U),
the climbing device (48) being variable in length along the climbing axis (SA) and for this purpose at least one of the step treads (54, 56, 58, 60) being adjustable relative to at least one other of the step treads (54, 56, 58, 60) with the aid of an adjustment actuator (76; 76').
**characterized in that** the climbing device (48) is adjustable into at least three different operating positions climb-ready for a climbing movement of a machine operator between the operator platform (28) and the contact subsurface (U), it being the case that for each step tread pair (54/56, 56/58, 58/60) formed by two of at least three step treads (54, 56, 58, 60) situated in succession along the climbing axis (SA) that the distance between the step treads (54, 56, 58, 60) of the respective step tread pair (54/56, 56/58, 58/60) is of a different magnitude in different operating positions.

2. The self-propelled earth working machine (10) as recited in Claim 1,
**characterized in that** the climbing device is adjustable steplessly within its adjustment range into a plurality of different climb-ready operating positions for a climbing movement of the machine operator between the operator platform and the contact subsurface.

3. The self-propelled earth working machine (10) as recited in Claim 1 or 2,
**characterized in that** the earth working machine (10) comprises a lifting device (17), by which the machine frame (14) is connected to the traveling gear (16) in height-adjustable fashion, the lifting device (17) being designed to change the distance of the machine frame (14) relative to the traveling gear (16).

4. The self-propelled earth working machine (10) as recited in one of the preceding claims,
**characterized in that** the adjustment actuator (76; 76') is designed to be operated in automated fashion in accordance with a reference to the contact subsurface in such a way that a predetermined step tread (54, 56, 58), which is movable relative to the machine frame (14), is situated in a predetermined spatial region relative to the machine frame (14) and/or relative to the contact subsurface (U).

5. The self-propelled earth working machine (10) as recited in one of the preceding claims,
**characterized in that** an upper (60) of the at least three step treads (54, 56, 58, 60), which is situated further away from the contact subsurface (U), is fixed to the machine frame (14).

6. The self-propelled earth working machine (10) as recited in one of the preceding claims,
**characterized in that** a lower (54) of the at least three step treads (54, 56, 58, 60) situated closer to the contact subsurface (U) is coupled by a connection means (68) to a drive unit-side coupling component (72), the drive unit-side coupling component (72) comprising a section of a drive unit (22) or a component (74) connected to the drive unit (22) for joint vertical displacement, wherein preferably the lower step tread (54) is coupled to the drive unit-side coupling component (72) with a clearance of motion with a degree of freedom of motion along the climbing axis (SA), in particular by a traction means (68) as the connection means (68) transmitting only traction force, such as a chain, rope or belt.

7. The self-propelled earth working machine (10) as recited in Claim 6,
**characterized in that** the drive unit-side coupling component (72) has a coupling configuration (70), to which the connection means (68) is connected, the coupling configuration (70) being movable relative to the drive unit (22) with a movement component along the climbing axis (SA).

8. The self-propelled earth working machine (10) as recited in one of Claims 4 through 7, with the inclusion of Claim 3,
wherein the lifting device (17) is the adjustment actuator (76) of the climbing device (48).

9. The self-propelled earth working machine (10) as recited in one of the preceding claims,
wherein an upper (58) of the at least three step treads (54, 56, 58, 60) situated further away from the contact subsurface (U) and a lower (56) of the at least three step treads (54, 56, 58, 60) situated closer to the contact subsurface (U) are coupled kinematically to each other via a movement synchronization mechanism (82) in such a way that the distances between respectively two step treads (54/56, 56/58, 58/60), succeeding one another along the climbing axis (SA), of the at least three step treads (54, 56, 58, 60) in a plurality of different operating states, relative to the greatest distance, do not differ by more than 10 %, preferably by no more than 5 %, particularly preferably not differing at all.

10. The self-propelled earth working machine (10) as recited in Claim 9,
**characterized in that** the movement synchronization mechanism (82) comprises a transmission assemblage (84) movable about an axis of motion (B) that is orthogonal with respect to the climbing axis (SA), at least a portion of the step treads (54, 56, 58) movable relative to the machine frame (14) along the climbing axis (SA) is respectively connected to the transmission assemblage (84) in movement-transmitting fashion in such a way that a movement of the transmission assemblage (84) correlates with an adjustment movement of the respective step tread (54, 56, 58) along the climbing axis (SA), the movement of the adjustment actuator (76) being transmittable to the transmission assemblage (84) and from there at a respectively different transmission ratio to each one of a plurality of the step treads (54, 56, 58) coupled to the transmission assemblage (84), which are movable relative to the machine frame (14) along the climbing axis (SA).

11. The self-propelled earth working machine (10) as recited in Claim 10,
**characterized in that** the transmission assemblage (84) comprises a swivel lever (86) swivable about a swivel axle (S) as the axis of motion (B) or is such a swivel lever (86), at least one portion of the step treads (54, 56, 58) movable relative to the machine frame (14) being linked on the swivel lever (86), the transmission ratio being determined by the distance between a linkage location (88a, 90a, 92a) of a step tread (54, 56, 58) on the swivel lever (86) and the swivel axle (S) of the swivel lever (86) and thus by the lever arm associated with this step tread (54, 56, 58),
and/or
the transmission assemblage (84) comprises or is a rotation assembly rotatable about a rotation axle as the axis of motion (B), the rotation assembly comprising a plurality of jointly rotating rotation bodies of different diameters, each step tread (54, 56, 58) out of at least a portion of the step treads (54, 56, 58) movable relative to the machine frame (14) being coupled to a respective engagement circumference of another rotation body for joint movement, the transmission ratio being determined by the diameter dimension of an engagement circumference of a rotation body.

12. The self-propelled earth working machine (10) as recited in one of Claims 3 through 7 and 9 through 11, with the inclusion of Claim 3,
**characterized in that** the adjustment actuator (76; 76') is an adjustment actuator (76') developed separately from the lifting device (17).

13. The self-propelled earth working machine (10) as recited in Claim 12, with the inclusion of Claim 4,
**characterized in that** a control device controlling the operation of the adjustment actuator (76') is designed to operate the adjustment actuator (76') in accordance with working state and/or working position information of the lifting device (17).

14. The self-propelled earth working machine (10) as recited in Claim 12 or 13, with the inclusion of Claim 9,
**characterized in that** the adjustment actuator (76; 76') has a multi-part telescopic actuator rod extensible and retractable along an actuator axis having synchronously extensible and retractable telescopic actuator sub-rods.

15. The self-propelled earth working machine (10) as recited in one of the preceding claims,
**characterized in that** the climbing device (48) is lockable in at least one predetermined position.

## Revendications

1. Machine automotrice de travail du sol (10) comprenant
- un cadre de machine (14),
- un châssis (16) portant le cadre de machine (14), le châssis (16) comprenant au moins deux trains de roulement (20, 22) pouvant rouler sur une base d'appui (U) de la machine de travail du sol (10),
- un dispositif de travail (30), qui est conçu pour travailler un sol,
- un moteur d'entraînement (46) pour fournir une force d'entraînement à la machine de travail du sol (10),
- un poste de commande (28) disposé sur le cadre de machine (14) à un niveau de hauteur au-dessus de la base d'appui (U) pour la commande de la machine de travail du sol (10), et
- un dispositif de montée (48) disposé entre la base d'appui (U) et le poste de commande (28), qui présente une pluralité de marches (54, 56, 58, 60), qui sont disposées les unes à la suite des autres le long d'un axe de montée virtuel (SA) s'étendant entre la base d'appui (U) et le niveau de hauteur du poste de commande (28) et formant un angle avec la base d'appui (U),
le dispositif de montée (48) étant modifiable en longueur le long de l'axe de montée (SA) et au moins l'une des marches (54, 56, 58, 60) étant à cet effet réglable par rapport à au moins une autre des marches (54, 56, 58, 60) au moyen d'un actionneur de réglage (76 ; 76'),
**caractérisé en ce que** le dispositif de montée (48) peut être réglé dans au moins trois positions de fonctionnement différentes, prêtes à la montée, pour un mouvement de montée d'un conducteur de machine entre le poste de commande (28) et la base d'appui (U), dans lequel pour chaque paire de marches (54, 56, 58, 60) formée de deux parmi au moins trois marches disposées les unes à la suite des autres le long de l'axe de montée (SA) la distance entre les marches (54, 56, 58, 60) de la paire de marches respective (54/56, 56/58, 58/60) est différente en valeur absolue dans différentes positions de fonctionnement.

2. Machine automotrice de travail du sol (10) selon la revendication 1,
**caractérisée en ce que** le dispositif de montée peut être réglé en continu, à l'intérieur de sa plage de réglage, dans une pluralité de positions de fonctionnement prêtes à la montée, différentes pour un mouvement de montée du conducteur de la machine entre le poste de commande et la base d'appui.

3. Machine automotrice de travail du sol (10) selon la revendication 1 ou 2,
**caractérisée en ce que** la machine de travail du sol (10) comprend un dispositif de levage (17) au moyen duquel le cadre de machine (14) est relié au châssis (16) de manière à pouvoir être modifié en hauteur, le dispositif de levage (17) étant conçu pour modifier la distance du cadre de machine (14) par rapport au châssis (16).

4. Machine automotrice de travail du sol (10) selon l'une quelconque des revendications précédentes,
**caractérisée en ce que** l'actionneur de réglage (76 ; 76') est conçu pour être actionné de manière automatisée en fonction d'une référence relative à la base d'appui de telle sorte qu'une marche (54, 56, 58) prédéterminé, mobile par rapport au cadre de machine (14), est disposé par rapport au cadre de machine (14) ou/et par rapport à la base d'appui (U) dans une zone spatiale prédéterminée.

5. Machine automotrice de travail du sol (10) selon l'une des revendications précédentes,
**caractérisée en ce qu'**une marche supérieure (60) desdites au moins trois marches (54, 56, 58, 60), située plus loin de la base d'appui (U), est disposée de manière fixe sur le cadre de machine (14).

6. Machine automotrice de travail du sol (10) selon l'une des revendications précédentes,
**caractérisée en ce qu'**une marche inférieure (54) desdites au moins trois marches (54, 56, 58, 60) située plus près de la base d'appui (U) est couplée à un élément d'accouplement (72) côté train de roulement par un moyen de liaison (68), dans lequel l'élément d'accouplement (72) côté train de roulement comprend une section d'un train de roulement (22) ou un composant (74) relié au train de roulement (22) pour un déplacement commun en hauteur, de préférence, la marche inférieure (54) étant couplé avec un jeu de mouvement ayant un degré de liberté de mouvement le long de l'axe de montée (SA) avec l'élément d'accouplement (72) côté train de roulement, en particulier au moyen d'un moyen de traction (68) transmettant uniquement une force de traction, tel qu'une chaîne, un câble ou une bande, en tant que moyen de liaison (68) couplé avec l'élément d'accouplement (72) côté train de roulement.

7. Machine automotrice de travail du sol (10) selon la revendication 6,
**caractérisée en ce que** l'élément d'accouplement (72) côté train de roulement présente une formation d'accouplement (70) à laquelle le moyen de liaison (68) est relié, la formation d'accouplement (70) étant mobile par rapport au train de roulement (22) avec une composante de mouvement le long de l'axe de montée (SA).

8. Machine automotrice de travail du sol (10) selon l'une des revendications 4 à 7, en incluant la revendication 3,
**caractérisée en ce que** le dispositif de levage (17) est l'actionneur de réglage (76) du dispositif de montée (48).

9. Machine automotrice de travail du sol (10) selon l'une des revendications précédentes,
**caractérisée en ce qu'**une marche supérieure (58) desdites au moins trois marches (54, 56, 58, 60), située plus loin de la base d'appui (U), et une marche inférieure (56) desdites au moins trois marches (54, 56, 58, 60), située plus près de la base d'appui (U), sont couplées cinématiquement l'une à l'autre par un mécanisme de synchronisation de mouvement (82) de telle manière, que les distances entre les deux marches (54/56, 56/58, 58/60) desdites au moins trois marches (54, 56, 58, 60) disposées les unes à la suite des autres le long de l'axe de montée (SA) ne diffèrent pas en valeur absolue de plus de 10 %, de préférence de plus de 5 %, de manière particulièrement préférée pas du tout, par rapport à la distance la plus grande, dans une pluralité de différents états de fonctionnement.

10. Machine automotrice de travail du sol (10) selon la revendication 9,
**caractérisée en ce que** le mécanisme de synchronisation de mouvement (82) comprend un agencement de transmission (84) mobile autour d'un axe de mouvement (B) orthogonal à l'axe de montée (SA), dans lequel au moins une partie des marches (54, 56, 58) mobiles par rapport au cadre de machine (14) le long de l'axe de montée (SA) est respectivement reliée à l'agencement de transmission (84) de manière à transmettre le mouvement, qu'un mouvement de l'agencement de transmission (84) est en corrélation avec un mouvement de réglage de la marche respective (54, 56, 58) le long de l'axe de montée (SA), le mouvement de l'actionneur de réglage (76) pouvant être transmis à l'agencement de transmission (84) et de là, avec un rapport de transmission respectivement différent, à chacune d'une pluralité de marches (54, 56, 58) mobiles par rapport au cadre de machine (14) le long de l'axe de montée (SA) et couplées à l'agencement de transmission (84).

11. Machine automotrice de travail du sol (10) selon la revendication 10,
**caractérisée en ce que** l'agencement de transmission (84) comprend un levier pivotant (86) pouvant pivoter autour d'un axe de pivotement (S) en tant qu'axe de déplacement (B) ou est un tel levier pivotant (86), dans lequel au moins une partie des marches (54, 56, 58) mobiles par rapport au cadre de machine (14) est articulée sur le levier pivotant (86), le rapport de transmission étant déterminé par la distance entre un point d'articulation (88a, 90a, 92a) d'une marche (54, 56, 58) sur le levier pivotant (86) et l'axe de pivotement (S) du levier pivotant (86) et donc par le bras de levier associé à cette marche (54, 56, 58),
ou/et
**en ce que** l'agencement de transmission (84) comprend ou est un ensemble de rotation pouvant tourner autour d'un axe de rotation en tant qu'axe de mouvement (B), dans lequel l'ensemble de rotation comprend une pluralité de corps de rotation de diamètres différents tournant ensemble, chaque marche (54, 56, 58) d'au moins une partie des marches (54, 56, 58) mobiles par rapport au cadre de machine (14) étant couplé à une circonférence d'engagement respective d'un autre corps de rotation pour un mouvement commun, le rapport de transmission étant déterminé par la dimension du diamètre d'une circonférence d'engagement d'un corps de rotation.

12. Machine automotrice de travail du sol (10) selon l'une des revendications 3 à 7 et 9 à 11, en tenant compte de la revendication 3,
**caractérisée en ce que** l'actionneur de réglage (76 ; 76') est un actionneur de réglage (76') conçu séparément du dispositif de levage (17).

13. Machine automotrice de travail du sol (10) selon la revendication 12 en incluant la revendication 4,
**caractérisée en ce qu'**un dispositif de commande commandant le fonctionnement de l'actionneur de réglage (76') est conçu pour actionner l'actionneur de réglage (76') en fonction d'une information d'état de travail ou/et de position de travail du dispositif de levage (17).

14. Machine automotrice de travail du sol (10) selon la revendication 12 ou 13 en tenant compte de la revendication 9,
**caractérisée en ce que** l'actionneur de réglage (76 ; 76') présente une tige d'actionneur télescopique en plusieurs parties pouvant être déployée et rétractée le long d'un axe d'actionneur avec des tiges partielles d'actionneur télescopique pouvant être déployées et rétractées de manière synchrone.

15. Machine automotrice de travail du sol (10) selon l'une des revendications précédentes,
**caractérisée en ce que** le dispositif de montée (48) peut être bloqué dans au moins une position prédéterminée.
